# EUROPÄISCHE PATENTSCHRIFT

(11) **EP 0 631 603 B1**
(45) Veröffentlichungstag und Bekanntmachung des Hinweises auf die Patenterteilung: **29.12.1997**
(21) Anmeldenummer: 93920529.0
(22) Anmeldetag: 16.03.1993
(51) Int. Cl.: C09D 4/06, C08F 283/10, C08F 299/02

(54) **PFROPFCOPOLYMERISATE, VERFAHREN ZU IHRER HERSTELLUNG, WÄSSRIGE BESCHICHTUNGSMASSEN SOWIE DEREN VERWENDUNG ZUR BESCHICHTUNG VON EMBALLAGEN**
GRAFT COPOLYMERS, PROCESS FOR PREPARING THE SAME, AQUEOUS COATING MASSES AND THEIR USE FOR COATING PACKAGES
COPOLYMERES GREFFES, LEUR PROCEDE DE PREPARATION, MASSES AQUEUSES D'ENDUCTION ET LEUR UTILISATION POUR ENDUIRE DES EMBALLAGES

(30) Priorität: 21.03.1992 DE 4209248
(43) Veröffentlichungstag der Anmeldung: 04.01.1995
(73) Patentinhaber: BASF Lacke + Farben AG, 48165 Münster-Hiltrup (DE)
(72) Erfinder: FIGGE, Hans-Jürgen, D-4400 Münster (DE); WILLMER, Regina, D-4400 Münster (DE)
(86) Internationale Anmeldenummer: EP9300613
(87) Internationale Veröffentlichungsnummer: WO9319133

(56) Entgegenhaltungen:
- EP-A- 0 141 733
- FR-A- 2 386 567
- US-A- 3 564 074

## Beschreibung

Gegenstand der vorliegenden Erfindung sind Pfropfcopolymerisate aus Epoxid- bzw. Phenoxyharzen, ethylenisch ungesättigten Monomeren mit Säureanhydridgruppen sowie weiteren ethylenisch ungesättigten Monomeren. Die Erfindung betrifft ferner Verfahren zur Herstellung der Pfropfcopolymerisate, wäßrige Beschichtungsmassen, die die Pfropfcopolymerisate enthalten, Verfahren zur Herstellung der wäßrigen Beschichtungsmassen sowie deren Verwendung zur Beschichtung von Emballagen.

Hochmolekulare Epoxidharze sowie Phenoxyharze sind geeignet zur Herstellung von Blechemballagen-Lacken, insbesondere von Blechemballagen-Innenschutzlacken. Als Vernetzungsmittel dienen beispielsweise Phenolharze, Melamin- und Harnstoffharze. Derartige Beschichtungsmittel auf Lösungsmittelbasis enthalten aufgrund vorgegebener Applikationsviskosität einen Lösungsmittelgehalt zwischen 60 und 70 Gew.-%. Wird - wie bei der Lackierung von zweiteiligen Getränkedosen - vorwiegend spritzlackiert, resultiert zumeist ein weiterer Anstieg des Lösungsmittelgehaltes, was starke Belastungen durch Lösungsmittelemissionen zur Folge hat.

Die Vorteile wäßriger Beschichtungssysteme liegen demgegenüber in einer deutlich verminderten Lösungsmittelemission. Bei Doseninnenschutzlacken ist außerdem zu bedenken, daß diese Lacke strengen lebensmittelrechtlichen Vorschriften entsprechen müssen.
Die Doseninnenbeschichtungen müssen bei Lagerung in Kontakt mit Lebensmitteln als Füllgut beständig sein. Doseninnenschutzlacke für den Lebensmittel- und Getränkesektor müssen daher eine ausreichende Füllgutbeständigkeit, eine ausreichende Pasteurisationsbeständigkeit und Sterilisationsbeständigkeit gewährleisten.

Lösungsmittelhaltige Doseninnenschutzlacke mit guten Eigenschaften auf der Basis von Kombinationen von Epoxidharzen und Phenol-Formaldehydharzen oder Aminoplastharzen sind seit langem bekannt. Insbesondere Epoxidharze auf Basis von Bisphenol A mit einem mittleren Molekulargewicht von mehr als 3.000 ergeben sehr beständige Beschichtungen.

Zur Anwendung solcher Systeme in wäßrigem Medium muß das Epoxidharz durch die Einführung solubilisierender Gruppen derart modifiziert werden, daß ein wasserlösliches bzw. wasserdispergierbares System entsteht. Da Aminogruppen enthaltende Harze bei Kontakt mit den überwiegend sauren Füllgütern Beständigkeitsschwächen ergeben, werden hochmolekulare und damit überwiegend hydrophobe Epoxidharze durch Modifizierung mit Carboxylgruppen wasserlöslich bzw. wasserdispergierbar gemacht. So sind beispielsweise aus der EP-A-6334 und der EP-A-6336 wäßrige Doseninnenschutzlacke auf Basis von Umsetzungsprodukten von Epoxidharzen mit COOH-Gruppen enthaltenden Acrylatcopolymerisaten bekannt. Die gebildeten Epoxiester werden durch Neutralisation von in der Acrylatkette vorhandenen Carboxylgruppen in eine wasserdispergierbare Form gebracht. Die aus den Schriften bekannten β-Hydroxyester können mit Hilfe von Vernetzungsmitteln gehärtet werden.

Die WO 89/1498 betrifft wäßrige Dispersionen, die als Beschichtungsmittel für Metallbehälter zur Aufbewahrung von Lebensmitteln und Getränken geeignet sind. Die Überzugszusammensetzungen enthalten Bindemittelmischungen, die hergestellt werden durch Additionspolymerisation von relativ preisgünstigen Monomeren, wie z.B. Styrol, in einem Reaktionsmedium, welches modifizierte Epoxidharze enthält. Diese werden erhalten durch Reaktion eines Teils der Epoxidgruppen mit ethylenisch ungesättigten Monomeren, die mit Epoxidgruppen reaktionsfähige Gruppen enthalten, wie z.B. ungesättigte Carbonsäuren, und Reaktion weiterer Epoxidgruppen mit tertiären Aminen und mit einem Präadditionspolymer, welches Carboxylgruppen enthält und zur Wasserdispergierbarkeit beiträgt.

Die Wasserdispergierbarkeit der aus den genannten Schriften bekannten modifizierten Epoxidharze ist jedoch verbesserungsbedürftig. Dies dürfte darauf zurückzuführen sein, daß die zur Wasserdispergierbarkeit erforderliche Modifizierung lediglich an den Epoxidgruppen erfolgt.

Aus der US-PS 4,212,781 und der US-PS 4,308,185 sind wäßrige Beschichtungsmittel für Emballagen bekannt, deren Bindemittel hergestellt werden durch radikalische Pfropfpolymerisation von ethylenisch ungesättigten Monomeren, die zum Teil Carboxylgruppen enthalten, in Gegenwart eines Epoxidharzes unter Verwendung von mindestens 3 Gew.-%, bezogen auf das Gesamtgewicht der Monomeren, peroxidischer Initiatoren. Durch Verwendung der relativ hohen Initiatormengen werden C-H-Bindungen an der Epoxidharzkette gespalten, und an diesen Stellen der Epoxidharzhauptkette werden Acrylatseitenketten aufgepfropft, wobei Kohlenstoff-Kohlenstoff-Verknüpfungen entstehen. Nachteilig sind hierbei die zwingend erforderlichen relativ hohen Initiator-Konzentrationen.

Aus der DE-C-27 47 818 sind wasserdispergierbare Epoxidharze bekannt, die hergestellt werden, indem ein Epoxidharz mit im Mittel mehr als einer Epoxidgruppe pro Molekül ggf. mit einem Diphenol kettenverlängert wird und anschließend mit einem gesättigten Carbonsäureanhydrid bis zur gewünschten Säurezahl von 5 bis 200 mg KOH/g umgesetzt wird. Die Kettenverlängerung wird derart durchgeführt, daß alle Epoxidgruppen umgesetzt werden. Die Wasserdispergierbarkeit der aus dieser Schrift bekannten Bindemittel ist jedoch verbesserungsbedürftig.

Aus den deutschen Offenlegungsschriften Nr. 26 08 880, 26 08 828, 26 08 839, 26 08 869, 26 08 901, 26 08 931, 26 08 941 und 26 08 942 schließlich sind Pfropfcopolymerisate bekannt, die hergestellt werden durch Umsetzung von flüssigen Epoxidverbindungen mit Epoxidäquivalentgewichten von 120 bis 450 mit ethylenisch ungesättigten Carbonsäuren und/oder ungesättigten Säureanhydriden mit 3 bis 5 Kohlenstoffatomen, Acrylsäureestern sowie Acrylnitril und/oder Methacrylnitril. In den Ausführungsbeispielen werden nur ungesättigte Carbonsäuren und keine ungesättigten Carbonsäureanhydride verwendet, die mit den Epoxidgruppen des Epoxidharzes umgesetzt werden. Die Pfropfcopolymerisate werden verwendet in lösungsmittelfreien bzw. -armen Überzugs- und Formmassen. Es werden keine wäßrigen Überzugs zusammensetzungen beschrieben.

Aus der US-A-3,564,074 ist ein Verfahren zur Herstellung von Vinylesterharzen bekannt, bei dem Polyepoxide mit ethylenisch ungesättigten Monocarbonsäuren umgesetzt werden. Die bei dieser Umsetzung gebildeten sekundären Hydroxylgruppen werden anschließend mit Carbonsäureanhydriden umgesetzt. Das gebildete Vinylesterharz wird ggf. mit ethylenisch ungesättigten Monomeren gemischt.

Aus der FR-A-2,386,567 ist ein Verfahren zur Herstellung lösungsmittel freier Imprägnierharzzusammensetzungen bekannt. Bei diesem Verfahren wird eine Mischung von Epoxidharzen mit einem Epoxidäquivalentgewicht zwischen 390 und 2500 und von flüssigen Epoxidharzen mit einem Epoxidäquivalentgewicht zwischen 100 und 385 mit Maleinsäureanhydrid zum Epoxydiester umgesetzt und mit ethylenisch ungesättigten Monomeren sowie einem radikalischen Initiator, der erst bei einer Temperatur oberhalb von 85 °C wirksam ist, gemischt.

Die der vorliegenden Erfindung zugrunde liegende Aufgabe bestand darin, wasserdispergierbare Epoxidharzbindemittel zur Verfügung zu stellen, die sich leicht und einfach herstellen lassen und eine ausgezeichnete Wasserdispergierbarkeit besitzen sollten. Die wasserdispergierbaren Epoxidharze sollten in wäßrigen Emballagenlacken, insbesondere in wäßrigen Doseninnenschutzlacken einsetzbar sein. Die auf Basis der wasserdispergierbaren Bindemittel hergestellten wäßrigen Beschichtungsmassen sollten zur Beschichtung von Dosen aus Aluminium, Weißblech und aus anderweitig speziell oberflächenvorbehandeltem Stahl geeignet sein. Darüber hinaus sollten sie sich eignen zur Beschichtung von Konservendosen, die gegenüber einer breiten Palette von Füllgütern auch unter Sterilisations- und Pasteurisationsbedingungen beständig sein müssen. Die wäßrigen Dispersionen sollten lagerstabil sein, und sie sollten sich einwandfrei insbesondere mittels Spritzlackierung applizieren lassen. Die aus den wäßrigen Beschichtungsmitteln resultierenden Lackfilme sollten zumindest das Eigenschaftsniveau konventioneller Doseninnenschutzlacke bezüglich Porenfreiheit, Füllgutbeständigkeit, Blechhaftung, Härte, Elastizität und Geschmacksneutralität erreichen oder dieses sogar übertreffen. Zur Beurteilung der Füllgutbeständigkeit ist dabei die Pasteurisations- bzw. Sterilisationsbeständigkeit eingebrannter Lackfilme gegenüber verschiedenen Testlösungen heranzuziehen.

Die der vorliegenden Erfindung zugrunde liegende Aufgabe wird gelöst durch Pfropfcopolymerisate der eingangs genannten Art, die dadurch gekennzeichnet sind, daß die Pfropfcopolymerisate (a) erhältlich sind aus
A) Epoxidharzen mit einem Epoxidäquivalentgewicht von mindestens 500, bevorzugt mindestens 700, und/oder Phenoxyharzen,
B) Carbonsäureanhydriden mit mindestens einer polymerisierbaren ethylenisch ungesättigten Doppelbindung pro Molekül und aus
C) weiteren ethylenisch ungesättigten Monomeren, welche ggf. zumindest teilweise eine Carboxylgruppe enthalten können,
wobei das Verhältnis des Gewichtes von A) zum Gesamtgewicht der Monomerkomponenten B) und C) im Bereich von 90 : 10 bis 10 : 90 liegt.

Sofern als Komponente C) keine Monomeren mit Carboxylgruppen verwendet werden, sind die erhaltenen Pfropfcopolymerisate (a) nicht wasserdispergierbar und damit nur in nichtwäßrigen Beschichtungsmitteln zu verwenden. Für den Einsatz in wasserverdünnbaren Lacken, insbesondere Dosenlacken, ist eine ausreichende Wasserdispergierbarkeit der Pfropfcopolymerisate (a) erforderlich. Gegenstand der vorliegenden Erfindung sind daher insbesondere Pfropfcopolymerisate (a), die erhältlich sind aus
A) 30 bis 80 Gew.-%, bevorzugt 50 bis 75 Gew.-%, Epoxidharzen mit einem Epoxidäquivalentgewicht von mindestens 700, bevorzugt mindestens 1500, und/oder Phenoxyharzen und
   70 bis 20 Gew.-%, bevorzugt 50 bis 25 Gew.-%, der Summe aus
B) Carbonsäureanhydriden mit mindestens einer polymerisierbaren, ethylenisch ungesättigten Doppelbindung pro Molekül und
C) weiteren ethylenisch ungesättigten Monomeren, welche zumindest zum Teil eine Carboxylgruppe enthalten,
   wobei die Summe der Gewichtsanteile der Komponenten A), B) und C) jeweils 100 Gew.-% beträgt, pro Mol der Komponente A) 0,02 bis 0,5 Mol der Komponente B) verwendet werden und die Säurezahl des Pfropfcopolymerisats (a) im Bereich von 40 bis 250 mg KOH/g liegt.

Als Komponente A) können Epoxidharze und/oder Phenoxyharze verwendet werden. Geeignete Epoxidharze sind beispielsweise solche auf Basis von Bisphenolen, vorzugsweise Bisphenol A, wobei diese ein Epoxidäquivalentgewicht von mindestens 500 bzw. von mindestens 700 aufweisen müssen. Die geeigneten Epoxidharze haben sekundäre Hydroxylgruppen zusätzlich zu den Epoxidgruppen. Gemäß der vorliegenden Erfindung werden diese sekundären Hydroxylgruppen mit der Carbonsäureanhydridkomponente B) umgesetzt. Es werden daher bevorzugt Epoxidharze mit höherem Epoxidäquivalentgewicht gemäß der vorliegenden Erfindung eingesetzt, da die Epoxidharzkomponente möglichst viele Hydroxylgruppen aufweisen sollte. Bevorzugt werden daher Epoxidharze mit einem Epoxidäquivalentgewicht von mindestens 700 und besonders bevorzugt solche mit einem Epoxidäquivalentgewicht von mindestens 1500 eingesetzt. Geeignete Epoxidharze sind aromatische Polyglycidylether, die z.B. unter den Warenzeichen Epikote 1001, Epikote 1004, Epikote 1007, Epikote 1008, Epikote 1055 und Epikote 1009 vertrieben werden.

Gemäß der vorliegenden Erfindung können als Komponente A) auch Phenoxyharze, ggf. auch im Gemisch mit den zuvor beschriebenen Epoxidharzen, verwendet werden. Geeignete Phenoxyharze sind herstellbar aus Diphenolen, wie Bisphenol A, und Epichlorhydrin, wobei die Phenoxyharze ein höheres Durchschnittsmolekulargewicht aufweisen. Es handelt sich bei ihnen um hydroxylgruppenhaltige Polyether ohne endständige Glycidylgruppen.

Geeignete Carbonsäureanhydride mit mindestens einer polymerisierbaren ethylenisch ungesättigten Doppelbindung (Komponente B) sind beispielsweise Acrylsäureanhydrid, Methacrylsäureanhydrid, Dodecenylbernsteinsäureanhydrid, Tetrahydrophthalsäureanhydrid und Maleinsäureanhydrid. Für den Verwendungszweck der Innenbeschichtung von Getränke- bzw. Konservendosen werden vorzugsweise Acrylsäureanhydrid und Methacrylsäureanhydrid eingesetzt. Die Menge an eingesetztem ungesättigten Carbonsäureanhydrid wird je nach gewünschtem Pfropfungsgrad variiert.

Geeignete ethylenisch ungesättigte Monomere der Komponente C) sind beispielsweise Styrol, α-Methylstyrol, Vinyltoluol, Ester der Acryl- und der Methacrylsäure, wie Methylacrylat, Methylmethacrylat, Ethylacrylat, Ethylmethacrylat, Propylacrylat, Propylmethacrylat, Isopropylacrylat, Isopropylmethacrylat, Butylacrylat, Butylmethacrylat, Amylacrylat, Amylmethacrylat, Isobutylacrylat, Isobutylmethacrylat, Hexylacrylat, Hexylmethacrylat, t-Butylacrylat, t-Butylmethacrylat, Decylacrylat, Decylmethacrylat, Laurylacrylat, Laurylmethacrylat, Isobornylacrylat, Isobornylmethacrylat, 2-Ethylhexylacrylat, 2-Ethylhexylmethacrylat, Octylacrylat, Octylmethacrylat, Nonylacrylat, Nonylmethacrylat, 2-Hydroxyethylacrylat, 2-Hydroxyethylmethacrylat, 3-Hydroxypropylacrylat, 3-Hydroxypropylmethacrylat, 4-Hydroxybutylacrylat, 4-Hydroxybutylmethacrylat, 5-Hydroxyamylacrylat, 5-Hydroxyamylmethacrylat, 6-Hydroxyhexylacrylat, 6-Hydroxyhexylmethacrylat, 8-Hydroxyoctylacrylat, 8-Hydroxyoctylmethacrylat, 2-Hydroxypropylacrylat, 2-Hydroxypropylmethacrylat, 2-Hydroxybutylacrylat, 2-Hydroxybutylmethacrylat, 3-Hydroxybutylacrylat, 3-Hydroxybutylmethacrylat.

Als Komponente C) können auch ethylenisch ungesättigte Monomere mit einer Carboxylgruppe eingesetzt werden. Die Verwendung dieser ethylenisch ungesättigten Carbonsäuren ist dann erforderlich, wenn die Pfropfcopolymerisate (a) eine ausreichende Wasserdispergierbarkeit aufweisen sollen. Beispiele für geeignete Monomere mit einer Carboxylgruppe sind Acrylsäure, Methacrylsäure und Crotonsäure.

Bevorzugt werden als Monomerkomponenten B) bzw. C) Methacrylsäureanhydrid und/oder Acrylsäureanhydrid bzw. Ethylacrylat, Methylmethacrylat, 2-Ethylhexylacrylat und Styrol und als Säuremonomere Acrylsäure und/oder Methacrylsäure verwendet. Besonders bevorzugt werden für den Bereich der Innenbeschichtung von Getränke- und Konservendosen Kombinationen aus Ethylacrylat, Styrol und Methacrylsäure oder Ethylacrylat, Methylmethacrylat, Styrol und Methacrylsäure oder auch 2-Ethylhexylacrylat, Methylmethacrylat und Acrylsäure als Komponente C verwendet.
Bevorzugt weisen die Pfropfcopolymerisate (a) eine Säurezahl von 60 bis 150 mg KOH/g auf.

Die erfindungsgemäßen Pfropfcopolymerisate können auf verschiedenen Wegen hergestellt werden. Im allgemeinen wird die Komponente A) in organischem Lösungsmittel bei Temperaturen von 60°C bis 160°C, bevorzugt bei 100°C bis 120°C, mit der Carbonsäureanhydridkomponente B) umgesetzt, wobei eine Reaktion der sekundären OH-Gruppen des Epoxid- bzw. Phenoxyharzes mit der Anhydridgruppe von B) erfolgt. Bei dieser Reaktion kann selbst bei Verwendung hochmolekularer Epoxid- bzw. Phenoxyharze bei einem hohen Festkörpergehalt, d.h. bei Festkörpergehalten von 80 bis 95 % gearbeitet werden. Als Lösungsmittel kommen solche in Frage, die gegenüber Anhydridgruppen inert sind. Geeignet sind Ketone, Ether, ggf. Ester, Kohlenwasserstoffe. Beispiele sind Methyl-n-propylketon, Methylisobutylketon, Diisobutylether, n-Propylacetat, n-Butylacetat, Isobutylacetat, n-Propylpropionat, Ethylbutyrat und Xylol.

Bei der Umsetzung mit dem Carbonsäureanhydrid ist darauf zu achten, daß wasserfreie Bedingungen vorliegen. Ggf. wird ein Katalysator bei der Umsetzung von A) und B) verwendet. Die Verwendung eines Katalysators ist jedoch im allgemeinen nicht notwendig.

Im Anschluß an die Umsetzung von A) und B) werden in einer zweiten Stufe in Gegenwart des Reaktionsproduktes aus A) und B) die ethylenisch ungesättigten Monomeren der Komponenten C) in organischem Lösungsmittel bei Temperaturen von 60°C bis 200°C, bevorzugt bei 120°C bis 140°C, unter Verwendung von mindestens 0,5 Gew.-%, bezogen auf das Gesamtgewicht der Komponenten B) und C), freie Radikale bildender Initiatoren polymerisiert. Vorzugsweise werden mindestens 2,0 Gew.-%, bezogen auf das Gesamtgewicht von B) und C), an Initiatoren verwendet.

Beispiele für geeignete Initiatoren sind Dibenzoylperoxid, t-Butylbenzoylperoxid, tert.-Butylperoctoat, Cumolhydroperoxid und Methylethylketonperoxid, t-Butylperbenzoat, Di-tert.-butylperoxid, tert.-Butylperoxi-2-ethylhexanoat, tert.-Butylperoxiisononanoat, tert.-Butylperoxiisobutyrat, tert.-Amylperoxi-2-ethylhexanoat, Peroxiketale, wie 2,2-Di-(tert.-amylperoxi)-propan und Ethyl-3,3-di(tert.-amylperoxi)-butyrat, Azoverbindungen, wie Azobiscyclohexannitril und Azo-bis-isovaleriat. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator ganz oder teilweise vorzulegen.

Bevorzugt wird die Reaktion in Gegenwart von Polymerisationsreglern durchgeführt, um so besser die Molekulargewichte bzw. die Molekulargewichtsverteilung steuern zu können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z. B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure. Bei anhydridfunktionellen Comonomeren ist darauf zu achten, daß der Regler nicht oder nur in geringem Maße mit den cyclischen Anhydrid-Gruppen reagieren kann. In diesem Fall wird bevorzugt t-Dodecylmercaptan eingesetzt. Diese Regler werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben. Zur Initiierung der Polymerisation werden bevorzugt mindestens 2,0 Gew.-%, bezogen auf B) + C), an Initiatoren eingesetzt.

Geeignete organische Lösungsmittel für die radikalische Pfropfcopolymerisation sind Monoalkohole mit 3 bis 18 Kohlenstoffatomen, wie z.B. Butanol, iso-Butanol, Propanol, iso-Propanol, Pentanol, Isopentanol; Glykolether, wie z.B. Butylglykol, Butyldiglykol, Hexylglykol, Propylenglykol.

Bei der in der zweiten Stufe stattfindenden Copolymerisation kann jedes beliebige Lösungsmittel verwendet bzw. zugesetzt werden. Um ein Gelieren des Bindemittels während des beschriebenen Herstellverfahrens bei hohem Pfropfungsgrad, also bei hohen Mengen an Komponente B), zu vermeiden, muß entweder bei der radikalischen Copolymerisation die Verdünnung mit einem geeigneten Lösungsmittel entsprechend gewählt werden, wobei entweder das Reaktionsprodukt aus A) und B) in organischem Lösungsmittel vorgelegt wird und die Monomeren und der Initiator zudosiert werden, oder das Reaktionsprodukt aus A) und B) mit den Monomeren C) und dem peroxidischen Initiator zudosiert werden.

Desweiteren können die anmeldungsgemäßen Pfropfcopolymerisate hergestellt werden, indem zunächst die Monomerkomponenten B) und C) in organischem Lösungsmittel bei Temperaturen von 60° bis 200°C, bevorzugt bei 120°C bis 140°C, unter Verwendung von mindestens 0,5 Gew.-%, bezogen auf das Gesamtgewicht von B) und C), freie Radikale bildender Initiatoren polymerisiert werden und anschließend das gebildete Säureanhydridgruppen enthaltende Copolymerisat mit A) umgesetzt wird im Temperaturbereich von 60°C bis 160°C, bevorzugt 100 bis 120°C, wobei ggf. Katalysatoren verwendet werden. Bei diesem Herstellungsprozeß ist darauf zu achten, daß sowohl bei der Herstellung des Copolymerisats als auch bei dessen Umsetzung mit dem Epoxid- und/oder Phenoxyharz organische Lösungsmittel gewählt werden, die gegenüber Säureanhydridgruppen inert sind. Dieses Herstellungsverfahren ist nicht geeignet, wenn als Monomerkomponente C) OH-haltige Monomere verwendet werden.

Bei diesem Herstellungsverfahren ist also sowohl in der zuerst durchgeführten Copolymerisation als auch in der anschließend durchgeführten Reaktion der Anhydridgruppen des gebildeten Copolymerisats mit den sekundären OH-Gruppen aus A) eine Beschränkung der Lösemittelauswahl gegeben, da die verwendeten Lösemittel inert sein müssen gegenüber Säureanhydridgruppen. Das zuletzt beschriebene Herstellungsverfahren ist jedoch gegenüber Gelierungsgefahr unempfindlicher.

Das erste beschriebene Herstellungsverfahren ist aus ökonomischen Gründen vorteilhafter, da in einem entsprechend ausgelegten Reaktor der Fertigungsprozeß von einem möglichen Epoxy-Upgrade bis zu einem Dispersionsschritt in Wasser fortlaufend durchgeführt werden kann, ohne daß zwischenzeitlich gebildete Zwischenprodukte gehandhabt werden müßten. Außerdem bietet dieses Verfahren größere Spielräume in der Wahl der organischen Lösungsmittel. Dies erweist sich insbesondere bei der Herstellung wäßriger Dispersionen als vorteilhaft. Bei dem zuerst beschriebenen Verfahren ist nur für den ersten Verfahrensschritt, der die Umsetzung von A) mit B) beinhaltet, wenn überhaupt nur ein geringer Lösemittelbedarf erforderlich. Selbst bei höher- und hochmolekularen Epoxidharzen und Phenoxyharzen kann in dieser ersten Stufe mit einem Festkörpergehalt von 80 bis 95 % gearbeitet werden.

Ein weiteres, jedoch nicht bevorzugtes Herstellungsverfahren besteht darin, daß die Komponente A) mit einer Mischung von B) und C) in einem Einstufenverfahren umgesetzt wird. Bei diesem Herstellungsverfahren, welches bevorzugt bei Phenoxyharzen als Komponente A) verwendet wird, laufen die radikalische Copolymerisation und die Umsetzung sekundärer OH-Gruppen von A) mit den cyclischen Anhydridgruppen von B) weitgehend gleichzeitig ab. Selbstverständlich dürfen bei diesem Herstellungsverfahren nur gegenüber Anhydridgruppen inerte Lösemittel verwendet werden.

Es ist möglich und zum Teil auch erwünscht, daß die Epoxidgruppen des als Komponente A) einsetzbaren Epoxidharzes teilweise oder vollständig mit einer gegenüber Epoxidgruppen reaktionsfähigen Verbindung umgesetzt worden sind. Auf diese Weise können die Eigenschaften des Pfropfcopolymerisats gesteuert werden. Geeignete gegenüber Glycidylgruppen reaktionsfähige Verbindungen sind beispielsweise gesättigte Monocarbonsäuren und/oder phenolische Verbindungen, wie z.B. Essigsäure, Benzoesäure, gesättigte Fettsäuren mit 6 bis 18 Kohlenstoffatomen, wie beispielsweise Palmitinsäure, Laurinsäure, Myristinsäure und Stearinsäure, Bisphenol A, Bisphenol F, Phenol, Nonylphenol, Dodecylphenol, Kresole, Xylenole, t-Butylphenol. In Frage kommen weiterhin Alkohole, wie beispielsweise Oktanol sowie primäre und sekundäre Amine, insbesondere Hydroxylamine, wie Ethanolamin und Diethanolamin. Bei der Reaktion des Epoxidharzes (A) mit Phenolen und gesättigten Carbonsäuren werden i.a. basische Katalysatoren verwendet, als Katalysator für die Defunktionalisierung mit Alkoholen kommt beispielsweise Bortrifluorid in Frage. Werden als gegenüber Epoxidgruppen reaktionsfähige Verbindungen Alkohole oder Phenole verwendet, wird die Verkappung der Epoxifunktion bevorzugt vor Umsetzung mit den Carbonsäureanhydriden (B) durchgeführt. Werden als Verkappungsmittel Carbonsäuren eingesetzt, sollte die Defunktionalisierung geeigneterweise vor oder nach der Umsetzung mit B), aber bevorzugt vor der Umsetzung mit C) stattfinden. Bei Aminen als Verkappungsmittel kann die weitgehende Umsetzung der Epoxidgruppen von (A) vor oder nach der Umsetzung mit (B) und vor oder nach der Umsetzung mit (C) durchgeführt werden, bevorzugt wird die Umsetzung jedoch vor der Umsetzung mit der Komponente (C) durchgeführt.

Die vorliegende Erfindung betrifft auch ein Herstellungsverfahren der zuvor beschriebenen Pfropfcopolymerisate, das dadurch gekennzeichnet ist, daß das Epoxidharz und/oder Phenoxyharz A) in organischem Lösungsmittel bei 60°C bis 160°C, vorzugsweise bei 100° bis 120°C, ggf. unter Verwendung von Katalysatoren mit den Carbonsäureanhydriden mit mindestens einer ethylenisch ungesättigten Doppelbindung pro Molekül B) umgesetzt wird und anschließend in Gegenwart des erhaltenen Reaktionsproduktes die ethylenisch ungesättigten Monomeren C) in organischem Lösungsmittel bei Temperaturen von 60°C bis 200°C, bevorzugt bei 120°C bis 140°C, unter Verwendung von mindestens 0,5 Gew.-%, bezogen auf das Gesamtgewicht der Monomeren B) und C), freie Radikale bildender Initiatoren polymerisiert werden, wobei ggf. die Epoxidgruppen aus der Komponente A) zumindest teilweise mit gegenüber Epoxidgruppen reaktionsfähigen Verbindungen umgesetzt werden können.

Weiterhin betrifft die vorliegende Erfindung ein Herstellungsverfahren der zuvor beschriebenen Pfropfcopolymerisate, das dadurch gekennzeichnet ist, daß die Carbonsäureanhydride B) und die ethylenisch ungesättigten Monomeren C) in organischem Lösungsmittel bei Temperaturen von 60°C bis 200°C, bevorzugt bei 120°C bis 140°C, unter Verwendung von mindestens 0,5 Gew.-%, bezogen auf das Gesamtgewicht der Monomeren B) und C), freie Radikale bildender Initiatoren polymerisiert werden und anschließend das gebildete Copolymerisat mit dem Epoxidharz und/oder Phenoxyharz in organischem Lösungsmittel bei 60°C bis 160°C, bevorzugt bei 100°C bis 120°C, ggf. unter Verwendung von Katalysatoren umgesetzt wird, wobei ggf. die Epoxidgruppen aus der Komponente A) zumindest teilweise mit gegenüber Epoxidgruppen reaktionsfähigen Verbindungen umgesetzt werden.

Wenn alle Epoxidgruppen des Pfropfcopolymerisates umgesetzt sind, ist es erforderlich, zur Aushärtung ein externes Vernetzungsmittel zuzusetzen.

Sofern die zuvor beschriebneen Pfropfcopolymerisate a) eine Säurezahl im Bereich von 40 bis 250 mg KOH/g aufweisen, sind sie hervorragend in Wasser dispergierbar, und sie eignen sich zur Verwendung in wäßrigen Beschichtungsmitteln. Sie sind jedoch auch gut geeignet zur Verwendung in nichtwäßrigen, lösungsmittelhaltigen Überzugsmitteln. Gegenstand der vorliegenden Erfindung sind daher ebenfalls wäßrige Beschichtungsmassen, die in Wasser dispergierte Bindemittellösungen enthalten, wobei diese
a) 30 bis 70 Gew.-%, bevorzugt 35 bis 65 Gew.-%, der zuvor beschriebenen erfindungsgemäßen Pfropfcopolymerisate,
b) 0 bis 30 Gew.-%, bevorzugt 5 bis 16 Gew.-%, mindestens eines Phenoplast- und/oder Aminoplastharzes als Vernetzungsmittel,
c) 1 bis 7 Gew.-%, bevorzugt 1 bis 5 Gew.-%, Ammoniak und/oder Amin als Neutralisationsmittel und
d) 5 bis 60 Gew.-% organische Lösungsmittel
enthalten, wobei die Summe der Gewichtsanteile der Komponenten a) bis d) jeweils 100 Gew.-% beträgt. Ggf. können in den wäßrigen Beschichtungsmassen zusätzlich zu den Pfropfcopolymerisaten (a) noch weitere wasserdispergierbare Bindemitte. vorzugsweise Epoxidharze, verwendet werden.

Geeignete Vernetzungsmittel b) sind beliebige Phenoplastharze, solange sie die für die Reaktivität erforderliche Methylol-Funktionalität aufweisen. Bevorzugte Phenolharze sind unter alkalischen Bedingungen hergestellte Reaktionsprodukte von Phenol, substituierten Phenolen und Bisphenol A mit Formaldehyd. Unter derartigen Bedingungen wird die Methylolgruppe entweder ortho- oder para-ständig mit dem aromatischen Ring verknüpft.
Bevorzugt werden Phenoplastharze vom Resoltyp eingesetzt, die auf Bisphenol A basieren und mehr als eine Methylolgruppe je Phenylring enthalten.

Typische geeignete Aminoplastharze (Komponente b) sind Melamin-, Benzoguanamin- und Harnstoff-Formaldehydharze. Bevorzugt werden diese in mit niedrigen Alkoholen, meistens Methanol und/oder Butanol, veretherter Form verwendet. Geeignete Aminoplastharze sind beispielsweise unter den Warenzeichen Cymel, Luwipal, Maprenal und Beetle auf dem Markt erhältlich. Ein geeignetes Aminoplastharz ist beispielsweise Hexamethoximethylmelamin.

Selbstverständlich sind neben den Kondensationsprodukten mit Formaldeyhd auch solche mit anderen Aldehyden verwendbar.

Für den Fall, daß das Pfropfcopolymerisat a) Epoxidgruppen enthält, ist es nicht notwendig, daß die Beschichtungsmasse ein Vernetzungsmittel b) zur Aushärtung enthält. Die Zusammensetzung ist also in diesem Fall selbstvernetzend. Bei Epoxidgruppen-freien Pfropfcopolymerisaten a) ist die Verwendung eines Vernetzungsmittels notwendig.

Als Neutralisationsmittel (Komponente c) werden 1 bis 7 Gew.-%, bevorzugt 1 bis 5 Gew.-%, jeweils bezogen auf das Gesamtgewicht der Komponenten a bis d, Ammoniak und/oder Amine eingesetzt.

Als Neutralisationsmittel c). bevorzugt sind Triethylamin und/oder Dimethylethanolamin.

Als Komponente d) geeignete organische Lösungsmittel sind beispielsweise Monoalkohole mit 3 bis 18 Kohlenstoffatomen, wie z.B. Butanol, iso-Butanol, Propanol und iso-Propanol, Pentanol, Isopentanol; Glykolether, wie beispielsweise Butylglykol, Butyldiglykol, Hexylglykol und Propylenglykol.

Bevorzugt werden als Lösungsmittel zumindest teilweise solche Lösungsmittel eingesetzt, die zugleich als Cosolvens für die wäßrige Dispersion geeignet sind, z.B. Butanol, Butylglykol und Butyldiglykol. Die Lösungsmittel werden üblicherweise in Mengen von 5 bis 60 Gew.-% eingesetzt.

Außer der beschriebenen Bindemittellösung, die üblicherweise in Mengen von 5 bis 60 Gew.-%, bevorzugt von 15 bis 50 Gew.-%, jeweils bezogen auf das Gesamtgewicht der Beschichtungsmasse, eingesetzt wird, können die Beschichtungmassen ggf. noch Pigmente und/oder Füllstoffe, weitere Hilfs- und Zusatzstoffe, ggf. weitere Lösungsmittel und Wasser in jeweils üblichen Mengen enthalten.

Pigmente und/oder Füllstoffe werden bevorzugt in Mengen von 25 bis 35 Gew.-%, bezogen auf das Gesamtgewicht der Beschichtungsmasse, eingesetzt. Beispiele für geeignete Pigmente sind Titandioxid, beispielsweise die unter den Handelsnamen Titan Rutil RN 59, RTC 60, R 900 und RDI-S erhältlichen Produkte.

Als Füllstoffe geeignet sind Bariumsulfat, wie z.B. die Handelsprodukte Blancfix micro, Blancfix F; Siliciumdioxid, z.B. das Handelsprodukt Quarzmehl SF 600; Kaliumcarbonat und Talkum.

Bevorzugt enthalten die Beschichtungsmassen noch 0,01 bis 5,0 Gew.-%, bezogen auf das Gesamtgewicht der Beschichtungsmasse, weitere Hilfs- und Zusatzstoffe, wie z.B. Gleitmittel wie Wachse, Weichmacher, Stabilisatoren, Netzmittel, Dispergierhilfsmittel, Katalysatoren, oberflächenaktive Zusatzmittel, und zwar einzeln oder im Gemisch.

Die erfindungsgemäßen wäßrigen Beschichtungsmassen enthalten bevorzugt 10 bis 25 Gew.-% organische Lösungsmittel und bevorzugt 20 bis 40 Gew.-% Wasser, jeweils bezogen auf das Gesamtgewicht der Beschichtungsmasse.

Wenn das Pfropfcopolymerisat a) noch genügend Epoxidgruppen enthält, kann auf die Verwendung eines Vernetzungsmittels b) verzichtet werden, d.h. das Beschichtungsmittel ist in diesem Fall selbstvernetzend.

Gegenstand der vorliegenden Erfindung ist auch das Herstellungsverfahren der zuvor beschriebenen wäßrigen Beschichtungsmassen, das dadurch gekennzeichnet ist, daß das in organischem Lösungsmittel d) gelöste Pfropfcopolymerisat a) mit Ammoniak und/oder Amin c) zumindest teilweise neutralisiert wird, ggf. das Vernetzungsmittel b) sowie ggf. weiteres Lösungsmittel d) sowie ggf. weitere übliche Zusatzstoffe, ggf. Pigmente und Füllstoffe zugemischt werden und die Beschichtungsmasse in Wasser dispergiert wird.

Die beschriebenen in organischen Lösungsmitteln gelösten Pfropfcopolymerisate werden durch Zugabe von Ammoniak und/oder Aminen zumindest teilweise neutralisiert. Der Ammoniak und/oder die Amine werden dabei in einer Menge eingesetzt, die ausreicht, um die Beschichtungsmasse wasserdispergierbar zu machen. Die Neutralisation der organischen Bindemittellösung mit tertiären Aminen wird vorzugsweise im Temperaturbereich von 60°C bis 120°C durchgeführt. Es werden ggf. Vernetzungsmittel b), ggf. für die Erzeugung eines gut verlaufenden Films notwendigen Cosolventien d) sowie ggf. weitere übliche Zusatzstoffe und ggf. Pigmente und Füllstoffe zugemischt. Anschließend wird die Beschichtungsmasse in Wasser dispergiert. Es ist auch möglich, das in organischem Lösungsmittel gelöste Pfropfcopolymerisat zunächst mit dem Vernetzungsmittel b) zu präkondensieren, wobei anschließend neutralisiert wird, ggf. weiteres Lösungsmittel d) sowie ggf. weitere übliche Zusatzstoffe, Füllstoffe und ggf. Pigmente zugemischt werden und die Beschichtungsmasse in Wasser dispergiert wird.

Die erfindungsgemäßen Beschichtungsmassen härten im Objekttemperaturbereich von 150 bis 400°C während einer Zeit von 2 s bis 10 min. aus. Sie können durch Walzen, Rakeln, Streichen, Spritzen, Fluten oder Tauchen mittels üblicher Vorrichtungen aufgebracht werden, wobei der Film anschließend zu einem festhaftenden Überzug ausgehärtet wird. Die Beschichtungsmassen werden im Falle der Doseninnenlacke bevorzugt mittels Spritzlackierung appliziert. Im Falle der Dosenaußenlacke werden sie bevorzugt mittels Walzenauftrag aufgetragen. Die erfindungsgemäßen wäßrigen Beschichtungsmassen können auch durch die anodische Elektrotauchlackierung aufgebracht werden. Dabei werden die zu beschichtenden Teile in ein wäßriges Bad auf Basis der erfindungsgemäßen, zuvor beschriebenen Überzugsmittel eingetaucht und als Anode geschaltet. Mittels Gleichstrom wird ein Film auf den Dosen abgeschieden, das Substrat wird aus dem Bad entfernt, und der Film wird durch Einbrennen gehärtet.

Die Beschichtungsmassen werden bevorzugt als Einschichtlackierung mit einer Trockenfilmschichtdicke von im allgemeinen 5 bis 25 µm aufgebracht.

Die erfindungsgemäßen Beschichtungsmassen eignen sich zur Beschichtung von Emballagen, insbesondere zur Innenbeschichtung von Dosen u. dgl.. Sie können aber auch zur Außenbeschichtung von Dosen u. dgl. eingesetzt werden. Die Emballagen können dabei aus den unterschiedlichsten Materialien bestehen und unterschiedlichste Geometrien aufweisen. Als Materialien kommen insbesondere Schwarzblech, Weißblech und verschiedene Eisenlegierungen in Frage, die ggf. mit einer Passivierungsschicht auf Basis von Nickel-, Chrom- und Zinkverbindungen versehen sind. Die Emballagen können in Form von beispielsweise Dosenhalbteilen, also Rümpfen und Deckeln, als 3-teilige Dosen und als 2-teilige, abgestreckttiefgezogene oder anderweitig tiefgezogene Dosen, wie z.B. Getränke- und Konservendosen, beschichtet werden.

Die wäßrigen Beschichtungsmassen sind lagerstabil, und die aus ihnen hergestellten Lackfilme weisen ein ausgezeichnetes Eigenschaftsniveau bezüglich Porenfreiheit, Füllgutbeständigkeit, Blechhaftung, Härte, Elastizität und Geschmacksneutralität auf. Die resultierenden Beschichtungen weisen sehr gute Pasteurisations- und Sterilisationsbeständigkeiten auf. Außerdem sind die wäßrigen Beschichtungsmitteldispersionen auch bei Verwendung von hochmolekularen Epoxidharzen und Phenoxyharzen sehr stabil, was möglicherweise darauf zurückzuführen ist, daß die hochmolekularen hydrophoben Anteile der Komponente A) des verwendeten Bindemittels durch die Pfropfcopolymerisation derart modifiziert werden, daß eine gute Wasserdispergierbarkeit resultiert.

Nachfolgend wird die Erfindung anhand von Ausführungsbeispielen näher erläutert:

### Beispiel 1: Herstellung einer wäßrigen Dispersion aus einem Anhydrid-modifizierten Epoxiacrylatharz

### 1.1 Umsetzung eines Epoxidharzes mit einem ethylenisch ungesättigten Anhydrid

In einem Vierhalskolben, der mit Rührer, Rückflußkühler und Thermometer ausgestattet ist, werden 1000 g eines festen Epoxidharzes vom Typ 1007 (Epikote 1007 der Firma Shell) mit einem Epoxiäquivalentgewicht von 1751 g/mol in 111 g Xylol bei 120°C gelöst. Man gibt 5,5 g Methacrylsäureanhydrid (0,55 % bezogen auf festes Epoxidharz) zu der Epoxidharzlösung und hält den Reaktorinhalt eine Stunde bei 120°C, anschließend wird mit 193 g Butylglykol, 223 g Butanol und 45 g Pentanolgemisch verdünnt.

### 1.2 Acrylierung des Reaktionsproduktes aus 1.1

In einem Vierhalskolben, der mit Rührer, Rückflußkühler, zwei Dosiergefäßen und Thermometer ausgestattet ist, werden 1568 g des Reaktionsproduktes aus 1.1 auf 120°C erwärmt. Aus dem einen Dosiergefäß wird eine vorgefertigte Mischung aus 179 g Methacrylsäure, 117 g Styrol und 128 g Ethylacrylat gleichmäßig über einen Zeitraum von zwei Stunden zum Reaktorinhalt zudosiert. Gleichzeitig läßt man aus dem zweiten Dosiergefäß eine Lösung von 10 g tert.-Butylperbenzoat in 30 g Butylglykol gleichmäßig während 2 1/2 Stunden zutropfen. Nach Beendigung der Zuläufe wird der Reaktorinhalt noch weitere drei Stunden bei 120°C gehalten. Das resultierende Produkt besitzt eine Säurezahl von 80,5 mg KOH/g und eine Viskosität von 4,8 dPa s (30 %ige Lösung in Butylglykol, Platte-Kegel-Viskosimeter bei 23°C) bei einem Festkörpergehalt von 71 %.

### 1.3 Neutralisation des Reaktionsproduktes aus 1.2

In einem Vierhalskolben, der mit Rührer, Rückflußkühler, Dosiergefäß und Thermometer ausgestattet ist, werden 1990 g des Reaktionsproduktes aus 1.2 auf 90°C erwärmt. Man gibt vorsichtig 542 g vollentsalztes Wasser in das Bindemittel, anschließend wird bei 90°C mit 74 g Dimethylethanolamin neutralisiert. Der Neutralisationsgrad beträgt 40 %.

### 1.4 Herstellung einer wäßrigen Dispersion aus dem aus 1.3 erhaltenen Reaktionsprodukt

Man läßt 2606 g des nach dem beschriebenen Verfahren neutralisierten Bindemittels aus 1.3 bei 80°C aus dem Reaktionsgefäß in eine Vorlage aus 4561 g vollentsalztem Wasser ablaufen und dispergiert über einen Zeitraum von einer Stunde ein. Die resultierende Dispersion hat einen Festkörper von 20 % und eine Auslaufzeit (DIN 4-Becher, 20°C) von 35 Sekunden.

### Beispiel 2: Herstellung einer wäßrigen Dispersion aus einem Anhydrid-modifizierten Epoxiacrylatharz unter weitgehender Verkappung der Epoxifunktionen mit Benzoesäure vor der acrylierung

### 2.1 Kettenverlängerung eines Epoxidharzes mit einem Epoxidäquivalentgewicht von 1700

In einen Vierhalskolben, der mit Rührer, Rückflußkühler und Thermometer ausgestattet ist, werden 663 g eines flüssigen Epoxidharzes auf Basis Bisphenol A mit einem Epoxidäquivalentgewicht von 187 g/mol und 111 g Xylol eingewogen und unter Rühren erhitzt. Bei 100°C werden 337 g Bisphenol A und 0,3 g Ethyltriphenylphosphoniumiodid (Shell Catalyst 1201) zugegeben. Das Reaktionsgemisch wird auf 160-165°C aufgeheizt. Die Wärmezufuhr wird so geregelt, daß die auftretende Exothermie die Temperatur im Kolben nicht über einen Maximalwert von 180°C ansteigen läßt. Das Reaktionsgemisch wird so lange bei 160-165°C gehalten, bis ein Ziel-EEW von 1700 erreicht ist, dann wird auf 140°C abgekühlt.

### 2.2 Umsetzung des gemäß 2.1 hergestellten Epoxidharzes mit einem ungesättigten Carbonsäureanhydrid

In einem Vierhalskolben, der mit Rührer, Rückflußkühler und Thermometer ausgestattet ist, werden 1090 g der Epoxidharzlösung aus 2.1 auf 140°C erhitzt. Man gibt 2,5 g Methacrylsäureanhydrid (0,25 g bezogen auf festes Epoxidharz) hinzu und hält den Reaktorinhalt eine Stunde bei 140°C, anschließend wird auf 130°C abgekühlt und mit 68 g Butylglykol, 68 g Butanol und 14 g Pentanolgemisch verdünnt.

### 2.3 Umsetzung des Reaktionsproduktes aus 2.2 mit Carbonsäure

In einem Vierhalskolben, der mit Rührer, Rückflußkühler und Thermometer ausgestattet ist, werden 1243 g des Reaktionsproduktes aus 2.2 auf 130°C erwärmt. Man gibt 58 g Benzoesäure und 2 g Dimethylbenzylamin hinzu und hält das Reaktionsgemisch bei 130°C, bis ein EEW > 10000 g/mol erreicht ist, dann wird abgekühlt und mit 275 g Butylglykol, 306 g Butanol und 61 g Pentanolgemisch verdünnt.

### 2.4 Acrylierung des Reaktionsproduktes aus 2.3

In einem Vierhalskolben, der mit Rührer, Rückflußkühler, zwei Dosiergefäßen und Thermometer ausgestattet ist, werden 1932 g des Reaktionsproduktes aus 2.3 auf 120°C erwärmt. Aus dem einen Dosiergefäß wird eine vorgefertigte Mischung aus 187 g Methacrylsäure, 122 g Styrol und 134 g Ethylacrylat gleichmäßig über einen Zeitraum von zwei Stunden zum Reaktorinhalt zudosiert. Gleichzeitig läßt man aus dem zweiten Dosiergefäß eine Lösung von 10 g tert.-Butylperbenzoat in 31 g Butylglykol gleichmäßig während 2,5 Stunden zutropfen. Nach Beendigung der Zuläufe wird der Reaktorinhalt noch weitere drei Stunden bei 120°C gehalten. Das resultierende Produkt besitzt eine Säurezahl von 79 mg KOH/g und eine Viskosität von 11,6 dPa s (30 %ige Lösung in Butylglykol, Platte-Kegel-Viskosimeter, D-Kegel bei 23°C) bei einem Festkörpergehalt von 62 %.

### 2.5 Neutralisation des Reaktionsproduktes aus 2.4

In einem Vierhalskolben, der mit Rührer, Rückflußkühler, Dosiergefäß und Thermometer ausgestattet ist, werden 1376 g des Reaktionsproduktes aus 2.4 auf 90°C erwärmt. Eine vorgefertigte Mischung aus 33 g Dimethylethanolamin und 150 g vollentsalztem Wasser wird über einen Zeitraum von 15 Minuten zum Reaktorinhalt zudosiert, danach wird noch 30 Minuten bei 90°C gehalten, anschließend auf 80°C abgekühlt. Der Neutralisationsgrad beträgt 30 %.

### 2.6 Herstellung einer wäßrigen Dispersion aus dem Reaktionsprodukt aus 2.5

Man läßt 1150 g des nach dem beschriebenen Verfahren neutralisierten Bindemittels aus 2.5 bei 80°C aus dem Reaktionsgefäß in eine auf 60°C erwärmte Vorlage aus 1192 g vollentsalztem Wasser ablaufen und dispergiert über einen Zeitraum von einer Stunde ein. Die resultierende Dispersion hat einen Festkörper von 27 % und eine Auslaufzeit (DIN-4-Becher, 23°C) von 60 Sekunden.

### 2.7 Herstellung unterschiedlich vernetzter Varnish-Lacke für LUG-Caps (Twist-Off-Verschlüsse) mit der Dispersion aus 2.6

Die gemäß 2.6 hergestellte Dispersion wird mit folgenden Vernetzern in zwei verschiedenen Verhältnissen (95 : 5 und 85 : 15) abgeprüft:

| | |
|---|---|
| Cymel 1123 | (Firma American Cyanamid) |
| Luwipal B 017 | (Firma BASF AG) |
| Desmodur BL 3175 | (Firma Bayer AG) |

Getestet werden Flexibilität auf Clubdosen, Sterilisationsbeständigkeit (1 h 130°C) und Stapelkleber. Die Varnish-Lacke werden im Aufbau mit einem Weißlack beurteilt.
Für jede Zwischenstufe des gesamten Einbrennvorgangs wird die Flexibilität separat beurteilt, d.h. ohne High-Bake (Einbrennvorgang für Varnish-Lack), mit High-Bake (Einbrennvorgang für Haftlack) und ohne bzw. mit Einbrennvorgang für eine Compound-Masse.
Die Sterilisation wird ohne und mit High-Bake beurteilt.

| Lack | 1 | 2 | 3 | 4 | 5 | 6 |
|---|---|---|---|---|---|---|
| Dispersion 2.6 | 100,0 | 100,0 | 100,0 | 100,0 | 100,0 | 100,0 |
| Cymel 1123 | 1,8 | 6,2 | - | - | - | - |
| Luwipal B 017 | - | - | 2,0 | 7,2 | - | - |
| Desmodur BL 3175 | - | | - | - | 2,4 | 8,3 |
| Aufbau mit Weißlack | | | | | | |
| Clubd. o.H.B.*) | 1 | 1 | 1 | 1 | 1 | 1 |
| Clubd. m.H.B.*) | 1 | 1 | 1 | 1 | 1 | 1 |
| Clubd. o.H.B./comp.*) | 1 | 1/2 | 1 | 1 | 1 | 1 |
| Clubd. m.H.B./Comp.*) | 1 | 2/4 | 1 | 1 | 1 | 1/2 |
| Sterilis. o.H.B. | n.i.O. | i.O. | n.i.O. | n.i.O. | i.O. | i.O. |
| Sterilis. m.H.B. | i.O. | i.O. | n.i.O. | i.O. | i.O. | i.O. |
| Stapelkleber o.H.B. | i.O. | i.O. | i.O. | i.O. | i.O. | i.O. |
| Stapelkleber m.H.B. | i.O. | i.O. | i.O. | i.O. | i.O. | i.O. |

| | | | | | | |
|---|---|---|---|---|---|---|
| *) Bewertung der Flexibilität: Notenskala 1 - 5, wobei die Note 1 sehr gut bedeutet und die Note 5 eine völlige Ablösung an den Ecken bedeutet | | | | | | |

### Beispiel 3: Herstellung einer wäßrigen Dispersion aus einem Anhydrid-modifizierten acrylierten Phenozyharz (Upgrade EEW 10000)

### 3.1 Herstellung eines Phenoxyharzes mit einem Epoxidäquivalentgewicht von etwa 10000

In einen Vierhalskolben, der mit Rührer, Rückflußkühler und Thermometer ausgestattet ist, werden 627 g eines flüssigen Epoxidharzes aus Basis Bisphenol A mit einem Epoxidäquivalentgewicht von 187 g/mol und 166 g Xylol eingewogen und unter Rühren erhitzt. Bei 80°C werden 373 g Bisphenol A und bei 100°C werden 0,5 g Ethyltriphenylphosphoniumiodid (Shell Catalyst 1201) zugegeben. Das Reaktionsgemisch wird auf 150-155°C aufgeheizt. Die Wärmezufuhr wird so geregelt, daß die auftretende Exothermie die Temperatur im Kolben nicht über einen Maximalwert von 155°C ansteigen läßt. Das Reaktionsgemisch wird so lange bei 150-155°C gehalten, bis ein EEW von 10000 g/mol erreicht ist, dann wird auf 140°C abgekühlt.

### 3.2 Umsetzung des Epoxidharzes aus 3.1 mit einem ethylenisch ungesättigten Anhydrid

In einem Vierhalskolben, der mit Rührer, Rückflußkühler und Thermometer ausgestattet ist, werden 1138 g der Epoxidharzlösung aus 3.1 auf 140°C erhitzt. Man gibt 5,0 g Methacrylsäureanhydrid (0,50 % bezogen auf festes Epoxidharz) hinzu und hält den Reaktorinhalt eine Stunde bei 140°C, anschließend wird auf 120°C abgekühlt und mit 528 g Butylglykol, 556 g Butanol und 111 g Pentanolgemisch verdünnt.

### 3.3 Acrylierung des Reaktionsproduktes aus 3.2

In einem Vierhalskolben, der mit Rührer, Rückflußkühler, zwei Dosiergefäßen und Thermometer ausgestattet ist, werden 1953 g des Reaktionsproduktes aus 3.2 auf 120°C erwärmt. Aus dem einen Dosiergefäß wird eine vorgefertigte Mischung aus 175 g Methacrylsäure, 115 g Styrol und 115 g Ethylacrylat gleichmäßig über einen Zeitraum von zwei Stunden zum Reaktorinhalt zudosiert. Gleichzeitig läßt man aus dem zweiten Dosiergefäß eine Lösung von 10 g tert.-Butylperbenzoat in 28 g Butylglykol gleichmäßig in 2,5 Stunden zutropfen. Nach Beendigung der Zuläufe wird der Reaktorinhalt noch weitere drei Stunden bei 120°C gehalten, danach wird weiter verdünnt mit 137 g Butylglykol, 137 g Butanol und 28 g Pentanolgemisch. Das resultierende Produkt besitzt eine Säurezahl von 73,6 mg KOH/g und eine Viskosität von 5,6 dPa s (20 %ige Lösung in Butylglykol, Platte-Kegel-Viskosimeter bei 23°C) bei einem Festkörpergehalt von 48 %.

### 3.4 Neutralisation und Dispersion des Reaktionsproduktes aus 3.3

In einem Vierhalskolben, der mit Rührer, Rückflußkühler, Dosiergefäß und Thermometer ausgestattet ist, werden 1474 g des Reaktionsproduktes aus 3.3 auf 90°C erwärmt. Man läßt 27 g Dimethylethanolamin in zehn Minuten zum Reaktorinhalt zulaufen, danach wird noch 30 Minuten bei 90°C gehalten, anschließend werden 1816 g auf 60°C temperiertes vollentsalztes Wasser über einen Zeitraum von einer Stunde zugegeben, und es wird noch eine Stunde bei 90°C eindispergiert. Der Neutralisationsgrad beträgt 30 %, die Dispersion hat eine Auslaufzeit (DIN-4-Becher, 20°C) von 27 Sekunden bei einem Festkörper von 20 %.

### Beispiel 4: Copolymerisation eines ungesättigten Anhydrids mit ethylenisch ungesättigten Monomeren und anschließende Umsetzung mit einem Epoxidharz

### 4.1 Herstellung eines Präpolymers durch Copolymerisation von Methacrylsäureanhydrid mit ethylenisch ungesättigten Monomeren

In einem Vierhalskolben, der mit Rührer, Rückflußkühler, zwei Dosiergefäßen und Thermometer ausgestattet ist, werden 627 g Methoxipropylacetat auf 120°C erwärmt. Aus dem einen Dosiergefäß dosiert man bei 120°C eine vorgefertigte Mischung aus 10 g Methacrylsäureanhydrid (1,0 % bezogen auf festes Epoxidharz), 265 g Methacrylsäure, 375 g Styrol und 409 g Ethylacrylat gleichmäßig über einen Zeitraum von zwei Stunden zu, und aus dem zweiten Dosiergefäß dosiert man eine Lösung von 27 g tert.-Butylperbenzoat in 90 g Methoxipropylacetat über einen Zeitraum von 2,5 Stunden zu, wobei beide Zuläufe gleichzeitig gestartet werden. Nach Beendigung der Zuläufe wird der Reaktorinhalt noch vier Stunden bei 120°C gehalten.

### 4.2 Umsetzung des Präpolymers mit Epoxidharz

1802 g des Präpolymergemisches aus 4.1 werden in einem Vierhalskolben, der mit Rührer, Rückflußkühler und Thermometer ausgestattet ist, auf 120°C erwärmt. In diesem Gemisch löst man portionsweise 1000 g festes Epoxidharz (Epikote 1007 mit einem EEW von 1751 g/mol) und läßt noch eine Stunde bei 120°C reagieren, danach wird mit 168 g Butylglykol auf einen Festkörper von 70 % verdünnt. Das Bindemittel hat eine Säurezahl von 85,3 mg KOH/g und eine Viskosität von 1,0 dPa s (25 %ige Lösung in Butylglykol, Platte-Kegel-Viskosimeter bei 23°C).

### Beispiel 5: Herstellung einer wäßrigen Dispersion aus einem Anhydrid-modifizierten Epoxiacrylatharz unter weitgehender Verkappung der Epoxifunktionen mit Essigsäure vor der Acrylierung

### 5.1 Upgrade eines Epoxidharzes mit einem Epoxidäquivalentgewicht von etwa 1700

In einem Vierhalskolben, der mit Rührer, Rückflußkühler und Thermometer ausgestattet ist, werden 663 g eines flüssigen Epoxidharzes auf Basis Bisphenol A mit einem Epoxidäquivalentgewicht von 187 g/mol und 111 g Xylol eingewogen und unter Rühren erhitzt. Bei 100°C werden 337 g Bisphenol A und 0,3 g Ethyltriphenylphosphoniumiodid (Shell Catalyst 1201) zugegeben. Das Reaktionsgemisch wird auf 160-165°C aufgeheizt. Die Wärmezufuhr wird so geregelt, daß die auftretende Exothermie die Temperatur im Kolben nicht über einen Maximalwert von 180°C ansteigen läßt. Das Reaktionsgemisch wird so lange bei 160-165°C gehalten, bis ein Epoxidäquivalentgewicht von 1700 erreicht ist, dann wird auf 140°C abgekühlt.

### 5.2 Umsetzung des Epoxidharzes aus 5.1 mit einem ungesättigten Anhydrid

In einem Vierhalskolben, der mit Rührer, Rückflußkühler und Thermometer ausgestattet ist, werden 1106 g der Epoxidharzlösung aus 5.1 auf 140°C erhitzt. Man gibt 5 g Methacrylsäureanhydrid (0,50 % bezogen auf festes Epoxidharz) hinzu und hält den Reaktorinhalt eine Stunde bei 140°C, anschließend wird auf 130°C abgekühlt und mit 63 g Butylglykol, 63 g Butanol und 13 g Pentanolgemisch verdünnt.

### 5.3 Umsetzung des Reaktionsproduktes aus 5.2 mit Carbonsäure

In einem Vierhalskolben, der mit Rührer, Rückflußkühler und Thermometer ausgestattet ist, werden 1245 g des Reaktionsproduktes aus 5.2 auf 130°C erwärmt. Man gibt 29 g Essigsäure und 2 g Dimethylbenzylamin hinzu und hält das Reaktionsgemisch bei 130°C, bis ein EEW > 10000 g/mol erreicht ist, dann wird abgekühlt und mit 255 g Butylglykol, 284 g Butanol und 57 g Pentanolgemisch verdünnt.

### 5.4 Acrylierung des gemäß 5.3 hergestellten Reaktionsproduktes

In einem Vierhalskolben, der mit Rührer, Rückflußkühler, zwei Dosiergefäßen und Thermometer ausgestattet ist, werden 1797 g des Reaktionsproduktes aus 5.3 auf 120°C erwärmt. Aus dem einen Dosiergefäß wird eine vorgefertigte Mischung aus 172 g Methacrylsäure, 113 g Styrol und 124 g Ethylacrylat gleichmäßig über einen Zeitraum von zwei Stunden zum Reaktorinhalt zudosiert. Gleichzeitig läßt man aus dem zweiten Dosiergefäß eine Lösung von 10 g tert.-Butylperbenzoat in 29 g Butylglykol gleichmäßig in 2,5 Stunden zutropfen. Nach Beendigung der Zuläufe wird der Reaktorinhalt noch weitere drei Stunden bei 120°C gehalten. Das resultierende Produkt besitzt eine Säurezahl von 73 mg KOH/g und eine Viskosität von 16,5 dPa s (30 %ige Lösung in Butylglykol, Platte-Kegel-Viskosimeter, D-Kegel bei 23°C) bei einem Festkörpergehalt von 63 %. Das Reaktionsgemisch wird mit 102 g Butylglykol, 102 g Butanol und 41 g Pentanolgemisch auf einen Festkörper von 55 % eingestellt.

### 5.5 Neutralisation des Reaktionsproduktes aus 5.4

In einem Vierhalskolben, der mit Rührer, Rückflußkühler, Dosiergefäß und Thermometer ausgestattet ist, werden 2488 g des Reaktionsproduktes aus 5.4 auf 95°C erwärmt. 53 g Dimethylethanolamin werden über einen Zeitraum von 15 Minuten zum Reaktorinhalt zudosiert, danach wird noch 20 Minuten bei 95°C gehalten, anschließend auf 80°C abgekühlt. Der Neutralisationsgrad beträgt 30 %.

### 5.6 Herstellung einer wäßrigen Dispersion aus dem Reaktionsprodukt aus 5.5

Man läßt 2541 g des nach dem beschriebenen Verfahren neutralisierten Bindemittels aus 5.5 bei 80°C aus dem Reaktionsgefäß in eine auf 60°C erwärmte Vorlage aus 2230 g vollentsalztem Wasser ablaufen und dispergiert über einen Zeitraum von einer Stunde ein. Die resultierende Dispersion hat einen Festkörper von 28 % und eine Auslaufzeit (DIN 4-Becher, 23°C) von 61 Sekunden.

### 5.7 Herstellung eines Innenspritzlackes für 2-teilige Getränkedosen mit der gemäß 5.6 hergestellten Dispersion

83,1 Teile der wäßrigen Dispersion aus 5.6 werden mit 2,3 Teilen Luwipal 068 (7 % bezogen auf Festkörper der Dispersion 5.6) und 1,46 Teilen vollentsalztem Wasser auf einen Festkörper von 25 % eingestellt. Die Abprüfung erfolgt in 33 cl Stahldosen. Gespritzt wird im Spray-Bake/Spray-Bake-Verfahren mit einer Auflage von 2*180 mg Lack/Dose. Für den Einbrennvorgang werden zwei unterschiedliche Trocknungen bei 215 und 225°C ausgetestet. Getestet werden Pasteurisations- und Sterilisationsbeständigkeit, Porigkeit, Vernetzung (MEK-Test), Flexibilität (Schlagprobe; Soll < 7 mm) und Füllgutbeständigkeit (CuSO₄-Test).

Das oben beschriebene Bindemittel zeigt ein außerordentlich gutes Ergebnis. Vor allem die Applikationseigenschaften sind durch eine ausgeprägte Thixotropie der Dispersion hervorzuheben.

Ergebnisse:

| Prüfung | Ergebnis |
|---|---|
| Pasteurisation¹: | |
| Wasseraufnahme⁷ | + |
| Haftung (Gitterschnitt)⁶ | GT 0 |
| | |
| Sterilisation²: | |
| Wasseraufnahme⁷ | ++ |
| Haftung (Gitterschnitt)⁶ | GT 0 |
| | |
| Porigkeit³ | 0,7 mA |
| MEK-Test⁴ | 50 DH |
| Schlagprobe | 5 mm |
| CuSO₄-Test⁵ | i.O. |
| pH-Wert | 6,97 |
| Festkörper | 24,7 % |
| Viskosität | 30 s DIN 4 |

| | |
|---|---|
| ¹ 45 Min. 80°C in VE-Wasser | |
| ² 60 Min. 121°C in Trinkwasser | |
| ³ Cu/Cd-Lösung, 30 s, 4 V | |
| ⁴ 1 kg Auflage | |
| ⁵ 10 % CuSO₄, 10 % rauchende HCl, 80 % Wasser, 24 Std. | |
| ⁶ Gitterschnittprüfung mit Tesafilmabriß, beste Note = GT 0, schlechteste Note = GT 5 | |
| ⁷ Bewertungsskala von ++ bis -- | |

### Beispiel 6: Herstellung einer wäßrigen Dispersion aus einem Anhydrid-modifizierten Epoxiacrylatharz unter weitgehender Verkappung der Epoxifunktionen vor der Acrylierung mit Essigsäure

### 6.1 Upgrade eines Epoxidharzes mit einem EEW von 1700

In einem Vierhalskolben, der mit Rührer, Rückflußkühler und Thermometer ausgestattet ist, werden 661 g eines flüssigen Epoxidharzes auf Basis Bisphenol-A mit einem Epoxiequivalentgewicht von 186 g/mol und 111 g Xylol eingewogen und unter Rühren erhitzt. Bei 100°C werden 339 g Bisphenol-A und 0,5 g Ethyltriphenylphosphoniumiodid (Shell Catalyst 1201) zugegeben. Das Reaktionsgemisch wird auf 160-165°C aufgeheizt. Die Wärmezufuhr wird so geregelt, daß die auftretende Exothermie die Temperatur im Kolben nicht über einen Maximalwert von 180°C ansteigen läßt. Das Reaktionsgemisch wird so lange bei 160-165°C gehalten, bis ein Ziel-EEW von 1700 erreicht ist, dann wird auf 140°C abgekühlt.

### 6.2 Umsetzung des Epoxidharzes aus 6.1 mit Anhydrid

In einem Vierhalskolben, der mit Rührer, Rückflußkühler und Thermometer ausgestattet ist, werden 1101. g der Epoxidharzlösung aus 6.1 auf 140°C erhitzt. Man gibt 8,5 g Dodecenylbernsteinsäureanhydrid (0,86 % bezogen auf festes Epoxidharz) hinzu und hält den Reaktorinhalt eine Stunde bei 140°C, anschließend wird auf 130°C abgekühlt und mit 66 g Butylglykol, 66 g Butanol und 13 g Pentanolgemisch verdünnt.

### 6.3 Umsetzung des Reaktionsproduktes aus 6.2 mit Carbonsäure

In einem Vierhalskolben, der mit Rührer, Rückflußkühler und Thermometer ausgestattet ist, werden 1254 g des Reaktionsproduktes aus 6.2 auf 130°C erwärmt. Man gibt 29 g Essigsäure und 2 g Dimethylbenzylamin hinzu und hält das Reaktionsgemisch bei 130°C, bis ein EEW > 12000 g/mol erreicht ist, dann wird abgekühlt und mit 286 g Butylglykol, 323 g Butanol und 65 g Pentanolgemisch verdünnt.

### 6.4 Acrylierung des Reaktionsproduktes aus 6.3

In einem Vierhalskolben, der mit Rührer, Rückflußkühler, zwei Dosiergefäßen und Thermometer ausgestattet ist, werden 1928 g des Reaktionsproduktes aus 6.3 auf 120°C erwärmt. Aus dem einen Dosiergefäß wird eine vorgefertigte Mischung aus 192 g Methacrylsäure, 156 g Styrol und 170 g Ethylacrylat gleichmäßig über einen Zeitraum von zwei Stunden zum Reaktorinhalt zudosiert. Gleichzeitig läßt man aus dem zweiten Dosiergefäß eine Lösung von 12 g tert.-Butylperbenzoat in 37 g Butylglykol gleichmäßig in 2,5 Stunden zutropfen. Nach Beendigung der Zuläufe wird der Reaktorinhalt noch weitere drei Stunden bei 120°C gehalten. Das resultierende Produkt besitzt eine Säurezahl von 80 mg KOH/g und eine Viskosität von 7,3 dPa s (30 %ige Lösung in Butylglykol, Platte-Kegel-Viskosimeter, C-Kegel bei 23°C) bei einem Festkörpergehalt von 63 %.

### 6.5 Neutralisation des Reaktionsproduktes aus 6.4

In einem Vierhalskolben, der mit Rührer, Rückflußkühler, Dosiergefäß und Thermometer ausgestattet ist, werden 1520 g des Reaktionsproduktes aus 6.4 auf 90°C erwärmt. Eine Mischung aus 37 g Dimethylethanolamin und 79 g vollentsalztem Wasser wird über einen Zeitraum von 15 Minuten zum Reaktorinhalt zudosiert, danach wird noch 20 Minuten bei 90°C gehalten, anschließend werden 144 g festes Epoxidharz auf Basis Bisphenol-A mit einem Epoxiequivalentgewicht von 1700 g/mol dem neutralisierten Bindemittel zugesetzt und 80 Minuten eingerührt, bis eine einheitliche Lösung entstanden ist. Der Neutralisationsgrad beträgt 30 %.

### 6.6 Herstellung einer wäßrigen Dispersion aus dem Reaktionsprodukt aus 6.5

Zu 1780 g des nach dem beschriebenen Verfahren neutralisierten Bindemittelgemisches aus 6.5 werden bei 90°C über einen Zeitraum von 60 Minuten 2187 g vollentsalztes Wasser zugegeben und unter Rühren eindispergiert. Anschließend wird noch über einen Zeitraum von einer Stunde bei 90°C nachdispergiert und dann abgekühlt. Die resultierende Dispersion hat einen Festkörper von 27 % und eine Auslaufzeit (DIN-4-Becher, 23°C) von 14 Sekunden.

### Beispiel 7: Herstellung einer wäßrigen Dispersion aus einem Anhydrid-modifizierten Epoxiacrylatharz unter weitgehender Verkappung der Epoxifunktionen vor der Acrylierung mit Essigsäure

### 7.1 Upgrade eines Epoxidharzes mit einem EEW von 1700

In einen Vierhalskolben, der mit Rührer, Rückflußkühler und Thermometer ausgestattet ist, werden 661 g eines flüssigen Epoxidharzes auf Basis Bisphenol-A mit einem Epoxiequivalentgewicht von 186 g/mol und 111 g Xylol eingewogen und unter Rühren erhitzt. Bei 100°C werden 339 g Bisphenol-A und 0,25 g Ethyltriphenylphosphoniumiodid (Shell Catalyst 1201) zugegeben. Das Reaktionsgemisch wird auf 160-165°C aufgeheizt. Die Wärmezufuhr wird so geregelt, daß die auftretende Exothermie die Temperatur im Kolben nicht über einen Maximalwert von 180°C ansteigen läßt. Das Reaktionsgemisch wird so lange bei 160-165°C gehalten, bis ein Ziel-EEW von 1700 erreicht ist, dann wird auf 140°C abgekühlt.

### 7.2 Umsetzung des Epoxidharzes aus 7.1 mit Anhydrid

In einem Vierhalskolben, der mir Rührer, Rückflußkühler und Thermometer ausgestattet ist, werden 1100 g der Epoxidharzlösung aus 7.1 auf 140°C erhitzt. Man gibt 8,5 g Dodecenylbernsteinsäureanhydrid (0,86 % bezogen auf festes Epoxidharz) hinzu und hält den Reaktorinhalt eine Stunde bei 140°C, anschließend wird auf 130°C abgekühlt und mit 66 g Butylglykol, 66 g Butanol und 13 g Pentanolgemisch verdünnt.

### 7.3 Umsetzung des Reaktionsproduktes aus 7.2 mit Carbonsäure

In einem Vierhalskolben, der mit Rührer, Rückflußkühler und Thermometer ausgestattet ist, werden 1254 g des Reaktionsproduktes aus 7.2 auf 130°C erwärmt. Man gibt 29 g Essigsäure und 2 g Dimethylbenzylamin hinzu und hält das Reaktionsgemisch bei 130°C, bis ein EEW > 9000 g/mol erreicht ist, dann wird abgekühlt und mit 287 g Butylglykol, 324 g Butanol und 65 g Pentanolgemisch verdünnt.

### 7.4 Acrylierung des Reaktionsproduktes aus 7.3

In einem Vierhalskolben, der mit Rührer, Rückflußkühler, zwei Dosiergefäßen und Thermometer ausgestattet ist, werden 1935 g des Reaktionsproduktes aus 7.3 auf 120°C erwärmt. Aus dem einen Dosiergefäß wird eine vorgefertigte Mischung aus 193 g Methacrylsäure, 157 g Styrol und 171 g Ethylacrylat gleichmäßig über einen Zeitraum von zwei Stunden zum Reaktorinhalt zudosiert. Gleichzeitig läßt man aus dem zweiten Dosiergefäß eine Lösung von 12 g tert.-Butylperbenzoat in 37 g Butylglykol gleichmäßig in 2,5 Stunden zutropfen. Nach Beendigung der Zuläufe wird der Reaktorinhalt noch weitere drei Stunden bei 120°C gehalten. Das resultierende Produkt besitzt eine Säurezahl von 80 mg KOH/g und eine Viskosität von 8,0 dPa s (30 %ige Lösung in Butylglykol, Platte-Kegel-Viskosimeter, C-Kegel bei 23°C) bei einem Festkörpergehalt von 63 %.

### 7.5 Neutralisation des Reaktionsproduktes aus 7.4

In einem Vierhalskolben, der mit Rührer, Rückflußkühler, Dosiergefäß und Thermometer ausgestattet ist, werden 1416 g des Reaktionsproduktes aus 7.4 auf 90°C erwärmt. Eine Mischung aus 34 g Dimethylethanolamin und 73 g vollentsalztem Wasser wird über einen Zeitraum von 15 Minuten zum Reaktorinhalt zudosiert, danach wird noch 20 Minuten bei 90°C gehalten, anschließend werden 134 g festes Epoxidharz auf Basis Bisphenol-A mit einem Epoxiequivalentgewicht von 1700 g/mol dem neutralisierten Bindemittel zugesetzt und 90 Minuten eingerührt, bis eine einheitliche Lösung entstanden ist. Der Neutralisationsgrad beträgt 30 %.

### 7.6 Herstellung einer wäßrigen Dispersion aus dem Reaktionsprodukt aus 7.5

Zu 1658 g des nach dem beschriebenen Verfahren neutralisierten Bindemittelgemisches aus 7.5 werden bei 90°C über einen Zeitraum von 60 Minuten 2038 g vollentsalztes Wasser zugegeben und unter Rühren eindispergiert. Anschließend wird noch über einen Zeitraum von einer Stunde bei 90°C nachdispergiert und dann abgekühlt. Die resultierende Dispersion hat einen Festkörper von 27 % und eine Auslaufzeit (DIN-4-Becher, 23°C) von 14 Sekunden.

### Beispiel 8: Herstellung einer wäßrigen Dispersion aus einem Anhydrid-modifizierten Epoxidharz unter teilweiser Verkappung der Epoxifunktion mit Benzoesäure vor der Acrylierung

### 8.1 Upgrade eines Epoxidharzes mit einem Equivalentgewicht von etwa 1700

In einem Vierhalskolben, der mit Rührer, Rückflußkühler und Thermometer ausgestattet ist, werden 661 g eines flüssigen Epoxidharzes auf Basis Bisphenol-A mit einem Epoxiequivalentgewicht von 186 g/mol und 111 g Xylol eingewogen und unter Rühren erhitzt. Bei 115°C werden 339 g Bisphenol A und 0,3 g Ethyltriphenylphosphoniumjodid (Shell Catalyst 1201) zugegeben. Das Reaktionsgemisch wird auf 160-165°C aufgeheizt. Die Wärmezufuhr wird so geregelt, daß die auftretende Exothermie die Temperatur im Kolben nicht über einem Maximalwert von 180°C ansteigen läßt. Das Reaktionsgemisch wird so lange bei 160-165°C gehalten, bis ein Epoxiequivalentgewicht von 1700 erreicht ist, dann wird auf 140°C abgekühlt.

### 8.2 Umsetzung des Epoxidharz aus 8.1 mit einem ungesättigten Anhydrid

In einem Vierhalskolben, der mit Rührer, Rückflußkühler und Thermometer ausgestattet ist, werden 1100 g der Epoxidharzlösung aus 8.1 auf 140°C erhitzt. Man gibt 2,5 g Methacrylsäureanhydrid (0,25 % bezogen auf festes Epoxidharz) hinzu und hält den Reaktorinhalt eine Stunde bei 140°C, anschließend wird auf 130°C abgekühlt und mit 68 g Butylglykol, 68 g Butanol und 14 g Pentanolgemisch verdünnt.

### 8.3 Umsetzung des Reaktionsgemisches aus 8.2 mit Carbonsäure unter Verwendung eines Phosphorkatalysators

In einem Vierhalskolben, der mit Rührer, Rückflußkühler und Thermometer ausgestattet ist, werden 1252 g des Reaktionsgemisches aus 8.2 auf 130°C erwärmt. Man gibt 46 g Benzoesäure und 0,5 g Ethyltriphenylphosphoniumjodid (Shell Catalyst 1201) hinzu und hält das Reaktionsgemisch bei 130°C, bis ein EEW von 5000 g/mol erreicht ist, dann wird abgekühlt und mit 304 g Butylglykol, 273 g Butanol und 61 g Pentanolgemisch verdünnt.

### 8.4 Acrylierung des gemäß 8.3 hergestellten Reaktionsproduktes

In einem Vierhalskolben, der mit Rührer, Rückflußkühler, zwei Dosiergefäßen und Thermometer ausgestattet ist, werden 1899 g des Reaktionsgemisches aus 8.3 auf 120°C erwärmt. Aus dem einen Dosiergefäß wird eine vorgefertigte Mischung aus 184 g Methacylsäure, 120 g Styrol und 131 g Ethylacrylat gleichmäßig über einen Zeitraum von zwei Stunden zum Reaktorinhalt zudosiert. Gleichzeitig läßt man aus dem zweiten Dosiergefäß eine Lösung von 10 g tert.-Butylperbenzoat in 31 g Butanol gleichmäßig in 2,5 Stunden zutropfen. Nach Beendigung der Zuläufe wird der Reaktorinhalt noch weitere drei Stunden bei 120°C gehalten. Das resultierende Produkt besitzt eine Säurezahl von 86 mg KOH/g und eine Viskosität von 9,4 dPa s (30 %ige) Lösung in Butylglykol, Platte-Kegel-Viskosimeter, D-Kegel bei 23°C) bei einem Festkörpergehalt von 62 %.

### 8.5 Neutralisation des Reaktionsproduktes aus 8.4

In einem Vierhalskolben, der mit Rührer, Rückflußkühler, Dosiergefäß und Thermometer ausgestattet ist, werden 2274 g des Reaktionsgemisches aus 8.4 auf 90°C erwärmt. Eine Lösung aus 55 g Dimethylethanolamin in 248 g vollentsalztem Wasser werden über einen Zeitraum von 15 Minuten zum Reaktorinhalt zudosiert, danach wird noch 30 Minuten bei 95°C gehalten, anschließend auf 80°C abgekühlt. Der Neutralisationsgrad beträgt 30 %.

### 8.6 Herstellung einer Wäßrigen Dispersion aus dem Reaktionsprodukt 8.5

Man läßt 2577 g des nach dem beschriebenen Verfahren neutralisierten Bindemittels aus 8.5 bei 80°C aus dem Reaktionsgefäß in eine auf 60°C erwärmte Vorlage aus 2560 g vollentsalztem Wasser ablaufen und dispergiert über einen Zeitraum von einer Stunde ein. Die resultierende Dispersion hat einen Festkörper von 28 % und eine Auslaufzeit (DIN-4-Becher, 20°C) von 30 Sekunden.

### 8.7 Herstellung unterschiedlich Vernetzter Varnish-Lacke für LUG-Caps (Twist-Off-Verschlüsse) mit der Dispersion aus 8.6

Die gemäß 8.6 hergestellte Dispersion wird mit folgenden Vernetzern in zwei verschiedenen Verhältnissen (95 : 5 und 85 : 15) abgeprüft):

| | |
|---|---|
| Cymel 1123 | (Firma American Cyanamid) |
| Luwipal B017 | (Firma BASF AG) |
| Desmodur BL 3175 | (Firma Bayer AG) |

Getestet werden die Flexibilität auf Clubdosen, die Sterilisationsbeständigkeit (1 h, 130°C) und der Glanz im Aufbau mit einem Weißlack.
Für jede Zwischenstufe des gesamten Einbrennvorgangs wird die Flexibilität separat beurteilt, d. h. ohne High-Bake (Einbrennvorgang für Varnish-Lacke), mit High-Bake (Einbrennvorgang für Haftlack) und ohne bzw. mit Einbrennvorgang für eine Compound-Masse.
Die Sterilisation wird ohne und mit High-Bake beurteilt.

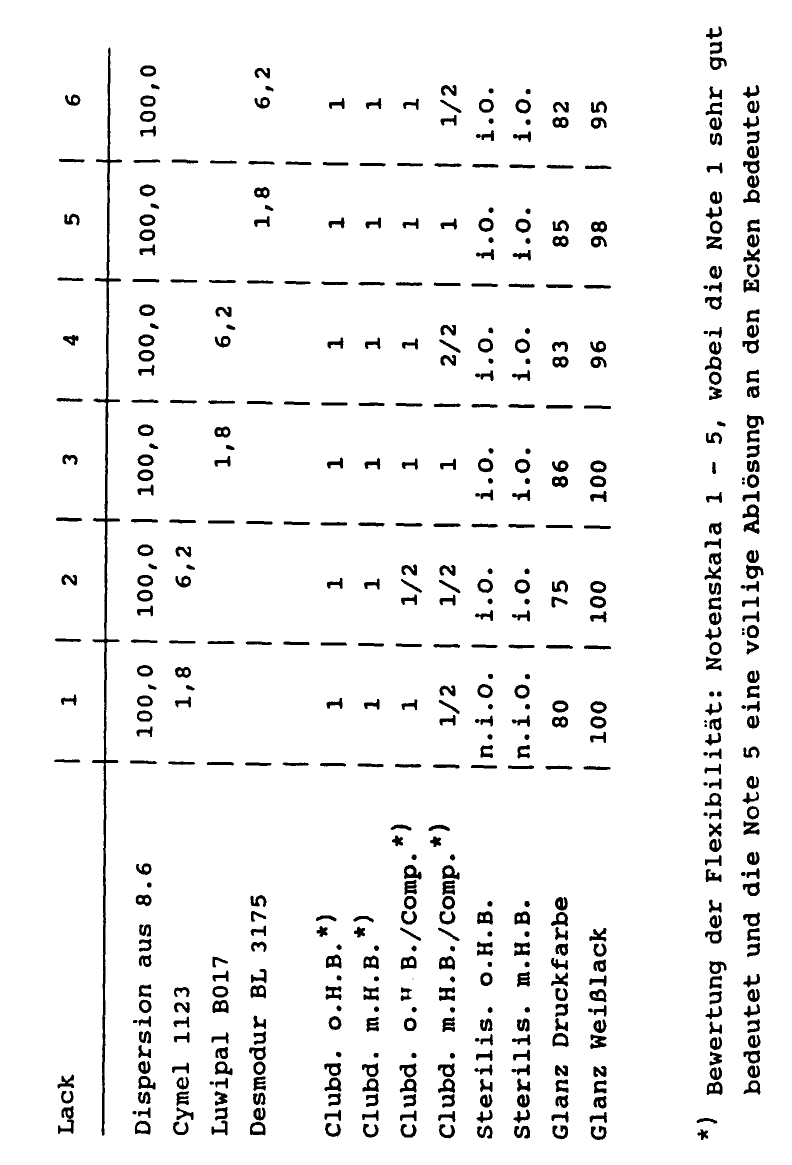

## Patentansprüche

1. Pfropfcopolymerisat aus Epoxidharzen und/oder Phenoxyharzen, ethylenisch ungesättigten Monomeren mit Säureanhydridgruppen sowie weiteren ethylenisch ungesättigten Monomeren, dadurch gekennzeichnet, daß das Pfropfcopolymerisat a) erhältlich ist aus
A) Epoxidharzen mit einem Epoxidäquivalentgewicht von mindestens 500, bevorzugt mindestens 700, und/oder Phenoxyharzen,
B) Carbonsäureanhydriden mit mindestens einer polymerisierbaren ethylenisch ungesättigten Doppelbindung pro Molekül und aus
C) weiteren ethylenisch ungesättigten Monomeren, welche ggf. zumindest teilweise eine Carboxylgruppe enthalten können,
wobei das Verhältnis des Gewichtes von A) zum Gesamtgewicht der Monomerkomponenten B) und C) im Bereich von 90 : 10 bis 10 : 90 liegt.

2. Pfropfcopolymerisat nach Anspruch 1, dadurch gekennzeichnet, daß das Pfropfcopolymerisat a) erhältlich ist aus
A) 30 bis 80 Gew.-%, bevorzugt 50 bis 75 Gew.-%, Epoxidharzen mit einem Epoxidäquivalentgewicht von mindestens 700, bevorzugt mindestens 1500, und/oder Phenoxyharzen und
70 bis 20 Gew.-%, bevorzugt 50 bis 25 Gew.-%, der Summe aus
B) Carbonsäureanhydriden mit mindestens einer polymerisierbaren, ethylenisch ungesättigten Doppelbindung pro Molekül und
C) weiteren ethylenisch ungesättigten Monomeren, welche zumindest teilweise Carboxylgruppen enthalten,
wobei die Summe der Gewichtsanteile der Komponenten A), B) und C) jeweils 100 Gew.-% beträgt, pro Mol der Komponente A) 0,02 bis 0,5 Mol der Komponente B) verwendet werden und die Säurezahl des Pfropfcopolymerisats a) im Bereich von 40 bis 250 mg KOH/g liegt.

3. Pfropfcopolymerisat nach Anspruch 2, dadurch gekennzeichnet, daß die Säurezahl von a) 60 bis 150 mg KOH/g beträgt.

4. Pfropfcopolymerisat nach Anspruch 2 oder 3, dadurch gekennzeichnet, daß als Komponente B) Methacrylsäureanhydrid und/oder Acrylsäureanhydrid und als Komponente C) Säuremonomere ausgewählt aus Acrylsäure und Methacrylsäure sowie weitere ethylenisch ungesättigte Monomere ausgewählt aus Ethylacrylat, Methylmethacrylat, 2-Ethylhexylacrylat und Styrol verwendet werden.

5. Pfropfcopolymerisat nach einem der Ansprüche 1 bis 4, dadurch gekennzeichnet, daß die Epoxidgruppen des Epoxidharzes A) zumindest teilweise mit einer gegenüber Epoxidgruppen reaktionsfähigen Verbindung umgesetzt worden sind.

6. Verfahren zur Herstellung des Pfropfcopolymerisats nach einem der Ansprüche 1 bis 5, dadurch gekennzeichnet, daß entweder
1. das Epoxidharz und/oder Phenoxyharz A) in organischem Lösungsmittel bei Temperaturen von 60°C bis 160°C, bevorzugt bei 100°C bis 120°C, ggf. unter Verwendung von Katalysatoren mit den Carbonsäureanhydriden mit mindestens einer ethyienisch ungesättigten Doppelbindung pro Molekül B) umgesetzt wird und anschließend in Gegenwart des erhaltenen Reaktionsproduktes die ethylenisch ungesättigten Monomeren C) in organischem Lösungsmittel bei Temperaturen von 60°C bis 200°C, bevorzugt bei 120°C bis 140°C, unter Verwendung von mindestens 0,5 Gew.-%, bezogen auf das Gesamtgewicht der Monomeren B) und C), freie Radikale bildender Initiatoren polymerisiert werden, wobei ggf. die Epoxidgruppen aus der Komponente A) zumindest teilweise mit gegenüber Epoxidgruppen reaktionsfähigen Verbindungen umgesetzt werden können, oder
2. die Carbonsäureanhydride B) und die ethylenisch ungesättigten Monomeren C) in organischem Lösungsmittel bei Temperaturen von 60°C bis 200°C, bevorzugt bei 120°C bis 140°C, unter Verwendung von mindestens 0,5 Gew.-%, bezogen auf das Gesamtgewicht der Monomeren B) und C), freie Radikale bildender Initiatoren polymerisiert werden und anschließend das gebildete Copolymerisat mit dem Epoxidharz und/oder Phenoxyharz A) in organischem Lösungsmittel bei 60°C bis 160°C, bevorzugt bei 100°C bis 120°C, ggf. unter Verwendung von Katalysatoren umgesetzt wird, wobei ggf. die Epoxidgruppen aus der Komponente A) zumindest teilweise mit gegenüber Epoxidgruppen reaktionsfähigen Verbindungen umgesetzt werden können.

7. Verfahren nach Anspruch 6, dadurch gekennzeichnet, daß bei hohen Mengen an Komponente B) entweder bei der radikalischen Copolymerisation die Verdünnung mit einem geeigneten Lösungsmittel entsprechend gewählt werden muß, wobei entweder das Reaktionsprodukt aus A) und B) in organischem Lösemittel vorgelegt wird und die Monomeren und der Initiator zudosiert werden, oder das Reaktionsprodukt aus A) und B) mit den Monomeren C) und dem peroxidischen Initiator zudosiert werden.

8. Nichtwäßriges, lösungsmittelhaltiges Überzugsmittel, dadurch gekennzeichnet, daß es das Pfropfcopolymerisat nach einem der Ansprüche 1 bis 5 enthält.

9. Wäßrige Beschichtungsmasse, enthaltend eine in Wasser dispergierte Bindemittellösung, die
a) 30 bis 70 Gew.-%, bevorzugt 35 bis 65 Gew.-% des Pfropfcopolymerisats nach einem der Ansprüche 1 bis 5,
b) 0 bis 30 Gew.-%, bevorzugt 5 bis 16 Gew.-%, mindestens eines Phenoplast- und/oder Aminoplastharzes als Vernetzungsmittel,
c) 1 bis 7 Gew.-%, bevorzugt 1 bis 5 Gew.-%, Ammoniak und/oder Amin als Neutralisationsmittel und
d) 5 bis 60 Gew.-% organische Lösungsmittel
enthält, wobei die Summe der Gewichtsanteile der Komponenten a) bis d) jeweils 100 Gew.-% beträgt.

10. Verfahren zur Herstellung der wäßrigen Beschichtungsmasse nach Anspruch 9, dadurch gekennzeichnet, daß das in organischem Lösungsmittel d) gelöste Pfropfcopolymerisat a) mit Ammoniak und/oder Amin c) zumindest teilweise neutralisiert wird, ggf. das Vernetzungsmittel b) sowie ggf. weiteres Lösungsmittel d) sowie ggf. weitere übliche Zusatzstoffe und ggf. Pigmente zugemischt werden und die Beschichtungsmasse in Wasser dispergiert wird.

11. Verfahren zur Herstellung der wäßrigen Beschichtungsmasse nach Anspruch 9, dadurch gekennzeichnet, daß das in organischem Lösungsmittel d) gelöste Pfropfcopolymerisat a) zunächst mit dem Vernetzungsmittel b) präkondensiert wird, dann mit Ammoniak und/oder Amin zumindest teilweise neutralisiert wird, ggf. weiteres Lösungsmittel d) sowie ggf. weitere übliche Zusatzstoffe und ggf. Pigmente zugemischt werden und die Beschichtungsmasse in Wasser dispergiert wird.

12. Verwendung der wäßrigen Beschichtungsmasse nach Anspruch 9, zur Beschichtung von Emballagen, insbesondere zur Innenbeschichtung von Dosen.

## Claims

1. Graft copolymer made from epoxy resins and/or phenoxy resins, ethylenically unsaturated monomers containing acid anhydride groups and further ethylenically unsaturated monomers, characterized in that the graft copolymer a) is obtainable from
A) epoxy resins having an epoxide equivalent weight of at least 500, preferably at least 700, and/or phenoxy resins,
B) carboxylic anhydrides containing at least one polymerizable, ethylenically unsaturated double bond per molecule, and from
C) further ethylenically unsaturated monomers, at least some of which may, if desired, contain a carboxyl group, where the ratio between the weight of A) and the total weight of monomer components B) and C) is in the range from 90:10 to 10:90.

2. Graft copolymer according to Claim 1, characterized in that the graft copolymer a) is obtainable from
A) from 30 to 80% by weight, preferably from 50 to 75% by weight, of epoxy resins having an epoxide equivalent weight of at least 700, preferably at least 1500, and/or phenoxy resins, and from 70 to 20% by weight, preferably from 50 to 25% by weight, of the sum of
B) carboxylic anhydrides containing at least one polymerizable, ethylenically unsaturated double bond per molecule, and
C) further ethylenically unsaturated monomers, at least some of which contain carboxyl groups,
where the sum of the proportions by weight of components A), B) and C) is in each case 100% by weight, from 0.02 to 0.5 mol of component B) are used per mole of component A), and the acid number of the graft copolymer a) is in the range from 40 to 250 mg of KOH/g.

3. Graft copolymer according to Claim 2, characterized in that the acid number of a) is from 60 to 150 mg of KOH/g.

4. Graft copolymer according to Claim 2 or 3, characterized in that component B) is methacrylic anhydride and/or acrylic anhydride, and component C) is acid monomers selected from acrylic acid and methacrylic acid, and further ethylenically unsaturated monomers selected from ethyl acrylate, methyl methacrylate, 2-ethylhexyl acrylate and styrene.

5. Graft copolymer according to one of Claims 1 to 4, characterized in that at least some of the epoxide groups of the epoxy resin A) have been reacted with a compound which is reactive toward epoxide groups.

6. Process for the preparation of the graft copolymer according to one of Claims 1 to 5, characterized in that either
1. the epoxy resin and/or phenoxy resin A) is reacted with the carboxylic anhydrides containing at least one ethylenically unsaturated double bond per molecule B) in an organic solvent at temperatures of from 60°C to 160°C, preferably at from 100° to 120°C, if desired using catalysts, and the ethylenically unsaturated monomers C) are subsequently polymerized in the presence of the resultant reaction product in an organic solvent at temperatures of from 60°C to 200°C, preferably at from 120°C to 140°C, using at least 0.5% by weight, based on the total weight of the monomers B) and C), of initiators which form free radicals, it being possible, if desired, for at least some ofthe epoxide groups from component A) to be reacted with compounds which are reactive toward epoxide groups, or
2. the carboxylic anhydrides B) and the ethylenically unsaturated monomers C) are polymerised in and organic solvent at temperatures of from 100°C to 200°C, preferably at from 120°C to 140°C, using at least 0.5% by weight, based on the total weight of the monomores B) and C), of initiators which form free radicals, and the copolymer formed is subsequently reacted with the opoxy resin and/or phenoxy resin A) in an organic solvent at from 100°C to 160°C, preferably at from 100°C to 120°C, if desired using catalysts, it being possible, if desired, for at lease some of the epoxide groups from component A) to be reacted with compounds which are reactive toward epoxide groups.

7. Process according to Claim 6, characterized in that, at high amounts of component B), either the dilution with a suitable solvent must be selected appropriately during the free-radical copolymerization, either the product of the reaction of A) and B) being initially introduced in an organic solvent and the monomers and the initiator being metered in, or the product of the reaction of A) and B) being metered in with the monomers C) and the peroxidic initiator.

8. Non aqueous, solvent-containing coating composition, characterized in that it contains the graft copolymer according to one of Claims 1 to 5.

9. Aqueous coating composition containing a water-dispersed binder solution which contains
a) from 30 to 70% by weight, preferably from 35 to 65% by weight, of the graft copolymer according to one of Claims 1 to 5,
b) from 0 to 30% by weight, preferably from 5 to 16% by weight, of at least one phenolic and/or amino resin as crosslinking agent,
c) from 1 to 7% by weight, preferably from 1 to 5% by weight, of ammonia and/or an amine as neutralizer, and
d) from 5 to 60% by weight of organic solvents,
where the sum of the proportions by weight of components a) to d) in each case is 100% by weight.

10. Process for the preparation of the aqueous coating composition according to Claim 9, characterized in that the graft copolymer a), dissolved in an organic solvent d) is at least partially neutralized by means of ammonia and/or amine c), if desired the crosslinking agent b) and if desired further solvent d) and if desired further conventional additives and if desired pigments are admixed, and the coating composition is dispersed in water.

11. Process for the preparation of the aqueous coating composition according to Claim 9, characterized in that the graft copolymer a) dissolved in an organic solvent d) is first precondensed with the crosslinking agent b) then at least partially neutralized by means of ammonia and/or amine, if desired further solvent d) and if desired further conventional additives and if desired pigments are admixed, and the coating composition is dispersed in water.

12. Use of the aqueous coating composition according to Claim 9 for coating packaging containers,in particular for the internal coating of cans.

## Revendications

1. Copolymère greffé constitué de résines époxyde et/ou de résines phénoxy, de monomères éthyléniquement insaturés ayant des groupes anhydride d'acide ainsi que de monomères éthyléniquement insaturés supplémentaires, caractérisé en ce que le copolymère greffé a) peut être obtenu à partir de
A) des résines époxyde ayant un poids équivalent en époxyde d'au moins 500, de préférence d'au moins 700, et/ou des résines phénoxy,
B) des anhydrides carboxyliques contenant au moins une double liaison éthyléniquement insaturée polymérisable par molécule, et de
C) des monomères éthyléniquement insaturés supplémentaires, qui peuvent éventuellement contenir au moins en partie un groupe carboxyle,
le rapport entre le point de A) et le poids total des composants monomères B) et C) étant dans la gamme de 90:10 à 10:90.

2. Copolymère greffé selon la revendication 1, caractérisé en ce que le copolymère greffé a) peut être obtenu à partir de
A) de 30 à 80% en poids, de préférence de 50 à 75% en poids, de résines époxyde ayant un poids équivalent en époxyde d'au moins 700, de préférence d'au moins 1500, et/ou de résines phénoxy, et
de 70 à 20% en poids, de préférence de 50 à 25% en poids, de la somme
B) d'anhydrides carboxyliques contenant au moins une double liaison éthyléniquement insaturée polymérisable par molécule, et
C) de monomères éthyléniquement insaturés supplémentaires, qui contiennent au moins en partie des groupes carboxyle,
la somme des proportions en poids des composants A), B) et C) étant à chaque fois de 100%, de 0,02 à 0,5 mol du composant B) étant utilisée par mole du composant A), et l'indice d'acide du copolymère greffé a) étant dans la gamme de 40 à 250 mg KOH/g.

3. Copolymère greffé selon la revendication 2, caractérisé en ce que l'indice d'acide de a) est de 60 à 150 mg KOH/g.

4. Copolymère greffé selon la revendication 2 ou 3, caractérisé en ce que l'on utilise en tant que composant B) l'anhydride méthacrylique et/ou l'anhydride acrylique, et en tant que composant C) des monomères acides choisis parmi l'acide acrylique et l'acide méthacrylique ainsi que des monomères éthyléniquement insaturés supplémentaires choisis parmi l'acrylate d'éthyle, le méthacrylate de méthyle, l'acrylate de 2-éthylhexyle et le styrène.

5. Copolymère greffé selon l'une quelconque des revendications 1 à 4, caractérisé en ce que les groupes époxyde de la résine époxyde A) sont mis à réagir au moins en partie avec un composé réactif vis-à-vis des groupes époxyde.

6. Procédé de préparation du copolymère greffé selon l'une quelconque des revendications 1 à 5, caractérisé en ce que soit
1. la résine époxyde et/ou la résine phénoxy A) est mise à réagir avec les anhydrides carboxyliques contenant au moins une double liaison éthyléniquement insaturée par molécule B) dans un solvant organique à des températures allant de 60°C à 160°C, de préférence de 100°C à 120°C, en utilisant éventuellement des catalyseurs, et les monomères éthyléniquement insaturés C) sont ensuite polymérisés en présence du produit de réaction résultant dans un solvant organique à des températures allant de 60°C à 200°C, de préférence de 120°C à 140°C, en utilisant au moins 0,5% en poids, sur la base du poids total des monomères B) et C), d'amorceurs formant des radicaux libres, les groupes époxyde du composant A) pouvant être mis à réagir éventuellement au moins en partie avec des composés réactifs vis-à-vis des groupes époxyde, soit
2. les anhydrides carboxyliques B) et les monomères éthyléniquement insaturés C) sont polymérisés dans un solvant organique à des températures allant de 60°C à 200°C, de préférence de 120°C à 140°C, en utilisant au moins 0,5% en poids, sur la base du poids total des monomères B) et C), d'amorceurs formant des radicaux libres, et le copolymère formé est ensuite mis à réagir avec la résine époxyde et/ou la résine phénoxy A) dans un solvant organique entre 60°C et 160°C, de préférence entre 100°C et 120°C, en utilisant éventuellement des catalyseurs, les groupes époxyde du composant A) pouvant éventuellement être mis à réagir au moins en partie avec des composés réactifs vis-à-vis des groupes époxyde.

7. Procédé selon la revendication 6, caractérisé en ce que pour des quantités élevées de composant B), la dilution avec un solvant approprié doit être choisie de manière appropriée dans le cas de la copolymérisation radicalaire, soit le produit de réaction de A) et B) étant introduit initialement dans un solvant organique et les monomères et l'amorceur étant ajoutés en quantité mesurée, soit le produit de réaction de A) et B) étant ajouté en quantité mesurée avec les monomères C) et l'amorceur peroxyde.

8. Agent de revêtement non aqueux contenant du solvant, caractérisé en ce qu'il contient le copolymère greffé selon l'une quelconque des revendications 1 à 5.

9. Masse d'enduction aqueuse, contenant une solution de liant dispersé dans l'eau, qui contient
a) de 30 à 70% en poids, de préférence de 35 à 65% en poids, du copolymère greffé selon l'une quelconque àes revendications 1 à 5,
b) de 0 à 30% en poids, de préférence de 5 à 16% en poids, d'au moins une résine phénoplaste et/ou aminoplaste en tant qu'agent réticulant,
c) de 1 à 7% en poids, de préférence de 1 à 5% en poids, d'ammoniac et/ou d'amine en tant qu'agent neutralisant, et
d) de 5 à 60% en poids de solvants organiques,
la somme des proportions en poids des composants a) à d) étant à chaque fois de 100%.

10. Procédé de préparation de la masse d'enduction aqueuse selon la revendication 9, caractérisé en ce que le copolymère greffé a) dissous dans un solvant organique d) est neutralisé au moins en partie avec de l'ammoniac et/ou une amine c), éventuellement l'agent réticulant b) et éventuellement un solvant supplémentaire d) et éventuellement des additifs habituels supplémentaires et éventuellement des pigments étant ajoutés et la masse d'enduction étant dispersée dans de l'eau.

11. Procédé de préparation de la masse d'enduction aqueuse selon la revendication 9, caractérisé en ce que le copolymère greffé a) dissous dans un solvant organique d) est d'abord précondensé avec l'agent réticulant b), puis est neutralisé au moins en partie avec de l'ammoniac et/ou une amine, éventuellement un solvant supplémentaire d) et éventuellement des additifs habituels supplémentaires et éventuellement des pigments étant ajoutés et la masse d'enduction étant dispersée dans de l'eau.

12. Utilisation de la masse d'enduction aqueuse selon la revendication 9, pour l'enduction d'emballages, en particulier pour l'enduction intérieure de boîtes métalliques.
